(19) **Europäisches Patentamt / European Patent Office / Office européen des brevets**

(11) **EP 2 023 638 A2**

(12) **EUROPÄISCHE PATENTANMELDUNG**

(43) Veröffentlichungstag:
**11.02.2009 Patentblatt 2009/07**

(51) Int Cl.:
***H04N 7/26*** *(2006.01)*

(21) Anmeldenummer: **08014299.5**

(22) Anmeldetag: **11.08.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **10.08.2007 DE 102007037857**

(71) Anmelder: **Micronas GmbH**
**79108 Freiburg i. Br. (DE)**

(72) Erfinder:
• **Niedermeier, Ulrich, Dr.**
**81539 München (DE)**
• **Rieder, Peter, Dr.**
**81737 München (DE)**

(74) Vertreter: **Patentanwälte**
**Westphal, Mussgnug & Partner**
**Herzog-Wilhelm-Strasse 26**
**80331 München (DE)**

(54) **Verfahren zur Reduktion von Bildartefakten**

(57) Beschrieben wird ein Verfahren zur Reduktion von Bildartefakten in einem eine Anzahl von Bildpunkten aufweisenden Bild, denen jeweils wenigstens ein Bildinformationswert zugeordnet ist und die in Zeilen und Spalten des Bildes angeordnet sind, wobei das Verfahren aufweist:
Durchführen einer Frequenzanalyse und Bereitstellen von mehreren Filterkoeffizienten zu wenigstens einigen der Bildpunkte des Bildes, anhand derer die Bildinformationswerte der Bildpunkte rekonstruierbar sind,

Durchführen einer Artefaktdetektion zur Detektion von Artefaktbereichen innerhalb des Bildes,
Modifizieren wenigstens einiger Filterkoeffizienten solcher Bildpunkte, die innerhalb der Artefaktbereiche liegen, zur Erzeugung modifizierter Filterkoeffizienten,
Synthetisieren der Bildinformationswerte unter Verwendung der Filterkoeffizienten, wobei für Bildpunkte, die innerhalb der Artefaktbereiche liegen die modifizierten Filterkoeffizienten zur Synthese verwendet werden.

EP 2 023 638 A2

**Beschreibung**

Die Erfindung betrifft ein Verfahren zur Reduktion von Bildartefakten, insbesondere von Artefakten die aus einer blockbasierten digitalen Videokompression resultieren.

Bei blockbasierten Videokompressionsverfahren, wie beispielsweise dem MPEG-Verfahren, werden aufeinanderfolgende Bilder einer Bildfolge in Bildblöcke mit jeweils mehreren Bildpunkten, beispielsweise 8x8 Bildpunkte, unterteilt und die Bildpunkte einzelner Blöcke werden gemeinsam kodiert. Ein durch die Kodierung entstehender Verlust an Bildinformation kann in einer aus den kodierten Daten rekonstruierten Bildfolge Bildartefakte bewirken, die je nach Bildinhalt mehr oder weniger stark auffällig sein können.

Ein Beispiel für solche Artefakte sind sogenannte Blockingartefakte, die dann entstehen, wenn an den Grenzen benachbarter Bildblöcke Diskontinuitäten im Bildverlauf auftreten, wenn an den Blockgrenzen also beispielsweise sprungartige Änderungen der den einzelnen Bildpunkten zugeordneten Helligkeitswerte (Luminanzwerte) auftreten. Die einzelnen Blockgrenzen sind innerhalb des Bildes dann sichtbar. Ein weiteres Beispiel für Bildartefakte, sind sogenannte Ringing-Artefakte. Hiermit bezeichnet man sichtbares Rauschen in der Nähe von scharfen Kanten eines durch die Bildfolge dargestellten Objekts.

Aufgabe der vorliegenden Erfindung ist es, ein Verfahren zur Reduktion von Bildartefakten zur Verfügung zu stellen. Diese Aufgabe wird durch ein Verfahren nach Anspruch 1 gelöst. Ausgestaltungen und Weiterbildungen sind Gegenstand von Unteransprüchen.

Ausführungsbeispiele der vorliegenden Erfindung werden nachfolgend anhand von Figuren näher erläutert.

Figur 1    zeigt schematisch einen Ausschnitt eines Bildes, das matrixartig angeordnete Bildpunkte aufweist, denen jeweils wenigstens Bildinformationswert zugeordnet ist.

Figur 2    veranschaulicht ein effektives, geringen Rechenaufwand verursachendes Verfahren zur Frequenzanalyse eines Bildinhalts, bei dem zu einzelnen Bildpunkten mehrere, jeweils einen Frequenzanteil repräsentierende Filter-koeffizienten ermittelt werden.

Figur 3    veranschaulicht im Überblick ein Verfahren zur Synthese bzw. Rekonstruktion eines Bildinformationswertes eines Bildpunktes anhand der Filterkoeffizienten.

Figur 4    veranschaulicht das Verfahren gemäß Figur 3 im Detail.

Figur 5    veranschaulicht eine vertikale Kante im Bildverlauf anhand den einzelnen Bildpunkten zugewiesener Bildinformationswerte (Figur 5A) und Auswirkungen dieser Kante im Bildverlauf auf die einzelnen Filterkoeffizienten (Figuren 5B bis 5J).

Figur 6    veranschaulicht die für das Bild gemäß Figur 5A durch Synthese aus den Filterkoeffizienten erhaltenen Bildinformationswerte, für den Fall, dass einzelne Filterkoeffizienten vor der Synthese mit dem Ziel modifiziert werden, den Kantenverlauf im Bild abzuflachen.

Figur 7    veranschaulicht eine horizontale Kante im Bildverlauf anhand den einzelnen Bildpunkten zugewiesener Bildinformationswerte (Figur 7A) und Auswirkungen dieser Kante im Bildverlauf auf die einzelnen Filterkoeffizienten (Figuren 7B bis 7J).

Figur 8    veranschaulicht die für das Bild gemäß Figur 7A durch Synthese aus den Filterkoeffizienten erhaltenen Bildinformationswerte, für den Fall, dass einzelne Filter- koeffizienten vor der Synthese mit dem Ziel modifiziert werden, den Kantenverlauf im Bild abzuflachen.

Figur 9    veranschaulicht ein Verfahren zur Detektion von Blockgrenzen innerhalb eines Bildes.

Figur 10    dient zur Erläuterung eines Verfahrens zur Detektion eines globalen Blockrasters innerhalb eines Bildes.

Figur 11    veranschaulicht ein Beispiel für eine Modifikation von Filterkoeffizienten bei Blockingartefakten.

Figur 12    veranschaulicht einen für die Detektion von Ringing-Artefakten analysierten Bildbereich und veranschaulicht die Position der Bildpunkte, deren Filterkoeffizienten bei Detektion eines Ringing-Artefakts modifiziert werden.

Figur 13      veranschaulicht die Modifikation von Filterkoeffizienten bei Detektion eines Ringing-Artefakts.

Figur 14      veranschaulicht ein Filterverfahren zur Analyse des Bildinhaltes, bei dem zu einzelnen Bildpunkten jeweils mehrere von Bildinformationswerten benachbarte Bildpunkte abhängige Filterkoeffizienten ermittelt werden.

In den Figuren bezeichnen, sofern nicht anders angegeben, gleiche Bezugzeichen gleiche Bildbereiche mit gleicher Bedeutung.

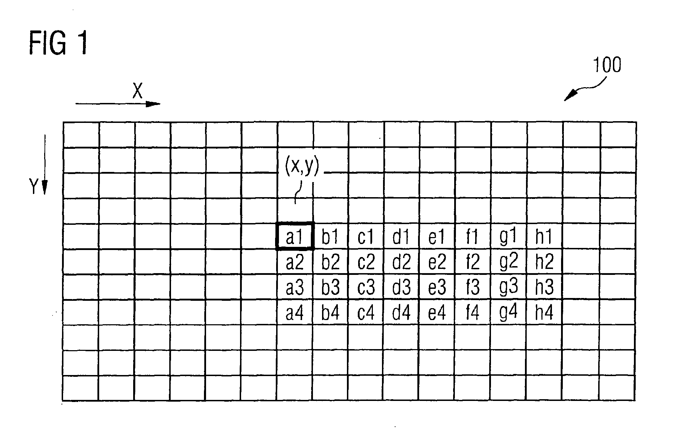

Figur 1 zeigt schematisch einen Ausschnitt eines Bildes 100, das eine Anzahl matrixartig angeordneter Bildpunkte aufweist, denen jeweils wenigstens ein Bildinformationswert zugeordnet ist. Die einzelnen Bildpunkte sind in Figur 1 durch matrixartig angeordnete Kästchen repräsentiert. X bezeichnet im Folgenden eine horizontale Richtung und Y eine vertikale Richtung dieser Bildpunktmatrix. (x, y) bezeichnet die Koordinaten eines beliebigen Punktes innerhalb dieser Bildpunktmatrix, der in Figur 1 fett dargestellt ist. Bildpunkte mit einer gemeinsamen y-Koordinate liegen in einer Zeile des Bildes 100, Bildpunkte mit einer gemeinsamen x-Koordinate liegen in einer Spalte des Bildes 100. Eine mxn-Matrix bezeichnet nachfolgend eine Bildpunktmatrix mit m Zeilen und n Spalten.

Für die weitere Erläuterung sei angenommen, dass die X-Koordinaten der einzelnen Bildpunkte nach rechts ansteigen, und dass die Y-Koordinaten der einzelnen Bildpunkte nach unten ansteigen, dass der Punkt mit den Koordinaten (0,0) der Bildpunktmatrix also in der linken oberen Ecke der Matrix liegt.

Den einzelnen Bildpunkten sind beispielsweise jeweils drei Bildinformationswerte, nämlich ein Helligkeitswert (Luminanzwert, Y-Wert) und zwei Farbkontrastwerte (Chrominanzwerte, UV-Werte) zugeordnet. Zu Zwecken der Erläuterung sei angenommen, dass das nachfolgend erläuterte Verfahren lediglich auf die den einzelnen Bildpunkten zugeordneten Luminanzwerte angewendet wird. Es sei jedoch darauf hingewiesen, dass das Verfahren in entsprechender Weise auch auf die Chrominanzwerte angewendet werden kann. Bei einer RGB-Farbdarstellung, bei der den einzelnen Bildpunkten jeweils Farbkontrastwerte für die drei Grundfarben Rot, Grün und Blau zugeordnet sind, kann das nachfolgend erläuterte Verfahren separat auf die Farbkontrastwerte für die einzelnen Grundfarben angewendet werden.

Zu Zwecken der Erläuterung sind für eine Matrix von 4x8 Bildpunkten, an deren linker oberer Ecke sich der Bildpunkt (x, y) befindet, Bildinformationswerte wiedergegeben, die mit a1 bis h4 bezeichnet sind. a1 ist hierbei der Bildinformationswert des Bildpunktes (x, y). h4 ist der Bildinformationswert des Bildpunktes (x+8, y+4) an der rechten unteren Ecke der Matrix.

Außerdem sei angenommen, dass die den einzelnen Bildpunkten zugeordneten Bildinformationswerte durch Dekodierung einer Signalfolge erhalten wurde, die durch blockbasierte Kompression einer Videosequenz entstanden ist. Bei verlustfreier Kodierung und verlustfreier Übertragung bzw. Speicherung der kodierten Signalfolge entspricht die durch Dekodierung der Signalfolge erhaltene Videosequenz vollkommen der ursprünglich kodierten Videosequenz. Die Kodierung von Videosequenzen ist jedoch unvermeidlich mit Informationsverlusten verbunden, die zu den eingangs erläuterten Artefakten führen können.

Bei dem nachfolgend erläuterten Verfahren ist zur Reduktion solcher Artefakte vorgesehen, die Position von Artefakten anhand der den einzelnen Bildpunkten zugeordneten Bildinformationswerte zu detektieren, eine Frequenzanalyse des Bildes vorzunehmen, Frequenzanteile von Bildpunkten in solchen Bildbereichen, in denen Artefakte detektiert wurden, zu modifizieren und anschließend die Bildinformationswerte anhand der gegebenenfalls modifizierten Frequenzanteile zu rekonstruieren.

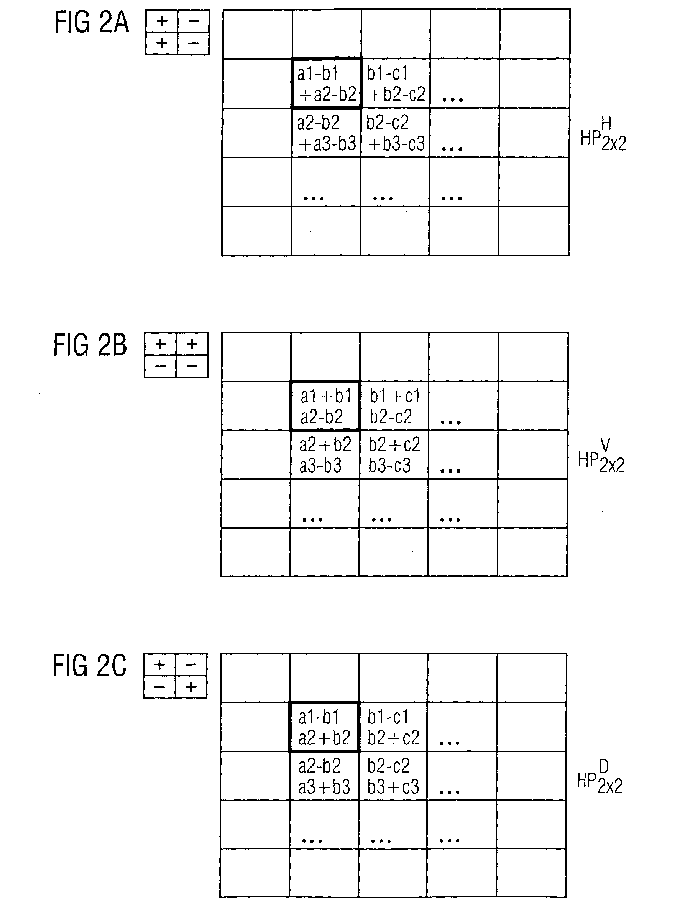

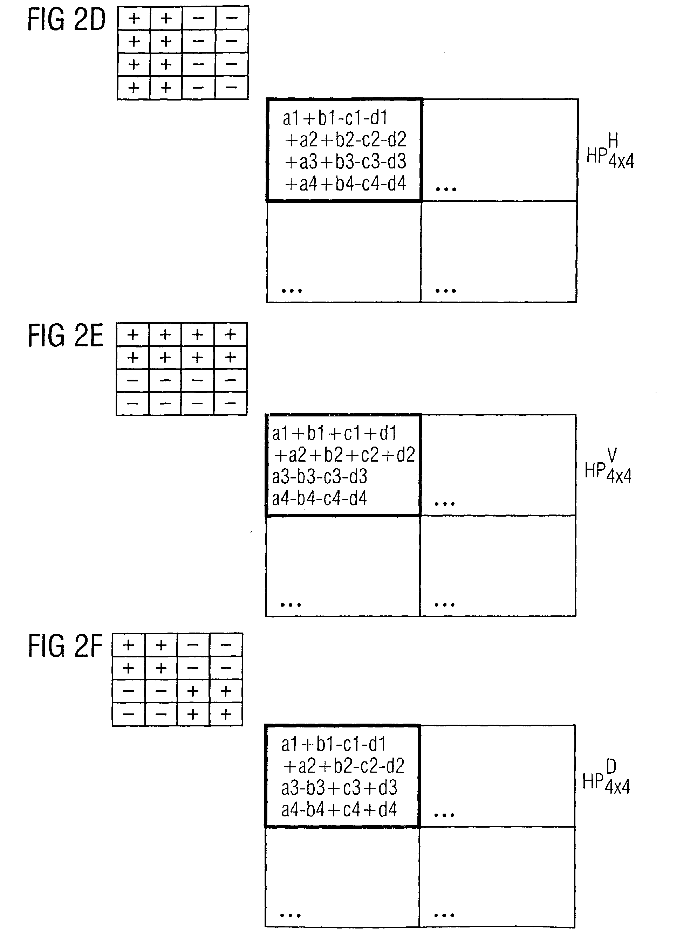

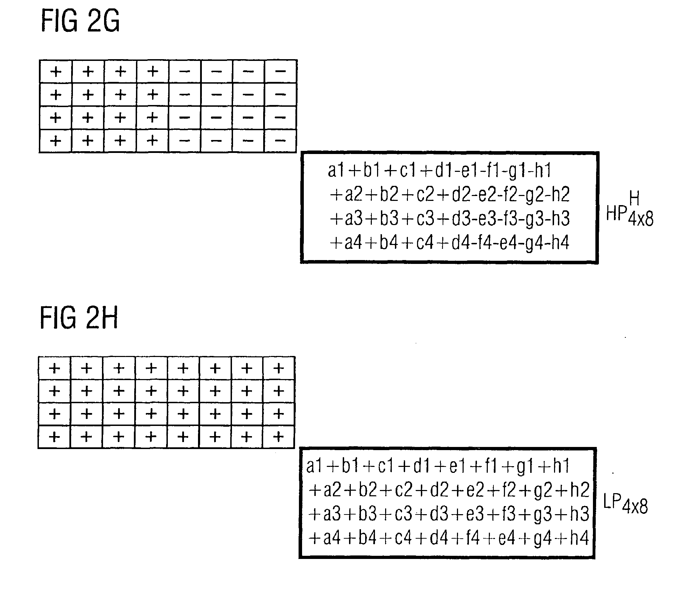

Anhand von Figur 2 wird nachfolgend zunächst ein mögliches Filterverfahren zur Frequenzanalyse des Bildinhaltes erläutert. Bei diesem Verfahren ist vorgesehen, zu einzelnen Bildpunkten des Bildes jeweils acht Filterkoeffizienten zu ermitteln, die jeweils eine Frequenzinformation enthalten. Die Ermittlung dieser Filterkoeffizienten wird nachfolgend für den in Figur 1 dargestellten Bildpunkt (x, y) anhand der Figuren 2A bis 2H erläutert. In diesen Figuren ist oben links jeweils das zur Ermittlung des einzelnen Filterkoeffizienten angewendete Filterschema und der resultierende Filterkoeffizient für den Bildpunkt (x, y) (und in den Figuren 2A bis 2C auch für benachbarte Bildpunkte) wiedergegeben. Der Position des Bildpunktes (x, y) ist dabei wieder durch eine fette Umrandung hervorgehoben. Das Filterschema gibt an, welche der Bildpunkte ausgehend von dem Bildpunkt (x, y) bei der Ermittlung des jeweiligen Filterkoeffizienten mit einem positiven und einem negativen Vorzeichen berücksichtigt werden. Das Vorzeichen in der linken oberen Ecke des Filterschemas gibt dabei das Vorzeichen wieder, mit dem der Bildpunkt (x, y) in dem Filterkoeffizienten berücksichtigt wird. Die übrigen Vorzeichen entsprechen den Vorzeichen von Bildpunkten, die entsprechend des Filterschemas benachbart zu dem Bildpunkt (x, y) angeordnet sind.

Ein erster Filterkoeffizient, der nachfolgend mit $HP^H_{2x2}$ bezeichnet ist, wird bezugnehmend auf Figur 2A durch eine horizontale Hochpassfilterung erhalten, in dem die Bildinformationswerte zweier in vertikaler Richtung benachbarter Bildpunkte addiert und davon die Bildinformationswerte der in horizontaler Richtung zu diesen Bildpunkten benachbarten Bildpunkte subtrahiert werden. Für diesen Hochpassfilterwert $HP^H_{2x2}$, der nachfolgend auch als horizontaler 2x2-Filterwert bezeichnet wird, des Bildpunktes (x, y) gilt:

$$HP^{H}{}_{2\times2}(x,y)=P(x,y)+P(x,y+1)-P(x+1,y)-P(x+1,y+1) \qquad (1a).$$

Ein zweiter Filterkoeffizient $HP^{V}{}_{2x2}$, der nachfolgend auch als vertikaler 2x2-Filterwert bezeichnet wird, wird bezugnehmend auf Figur 2B durch vertikale Hochpassfilterung erhalten. Hierzu werden die Bildinformationswerte zweier in horizontaler Richtung benachbarter Bildpunkte addiert und hiervon die Bildinformationswerte der in vertikaler Richtung benachbarten Bildpunkte subtrahiert. Die Bildinformationswerte zweier in horizontaler Richtung benachbarter Bildpunkte gehen also mit positivem Vorzeichen, und die Bildinformationswerte zweier in vertikaler Richtung zu diesen Bildpunkten benachbarten Bildpunkten gehen mit negativem Vorzeichen in diesen Filterkoeffizienten ein. Für den vertikalen 2x2-Filterkoeffizienten des Bildpunktes (x, y) gilt hierbei:

$$HP^{V}{}_{2\times2}(x,y)=P(x,y)+P(x+1,y)-P(x,y+1)-P(x+1,y-1) \qquad (1b).$$

Ein dritter Filterkoeffizient $HP^{D}{}_{2x2}$, der nachfolgend auch als diagonaler 2x2-Filterkoeffizient bezeichnet wird, wird bezugnehmend auf Figur 2 durch eine diagonale Filterung erhalten. Bildinformationswerte zweier in diagonaler Richtung benachbarter Bildpunkte gehen hierbei mit positivem Vorzeichen in diesen Filterkoeffizienten $HP^{D}{}_{2x2}$ ein, die Bildinformationswerte zweier weitere Bildpunkte, die unmittelbar benachbart zu den beiden anderen Bildpunkten angeordnet sind, gehen mit negativem Vorzeichen in diesen Filterkoeffizienten $HP^{D}{}_{2x2}$ ein. Für diesen diagonalen 2x2-Filterkoeffizienten des Bildpunktes (x, y) gilt:

$$HP^{D}{}_{2\times2}(x,y)=P(x,y)-P(x+1,y)-P(x,y+1)+P(x+1,y+1) \qquad (1c).$$

Ein vierter Filterkoeffizient $HP^{H}{}_{4x4}$, der nachfolgend auch als horizontaler 4x4-Filterkoeffizient bezeichnet wird, wird bezugnehmend auf Figur 2D erhalten, indem die Bildinformationswerte einer Bildpunktmatrix mit 4x2 Bildpunkten, an deren oberer linker Ecke der Bildpunkt (x, y) liegt, addiert werden und indem von der erhaltenen Summe die Summe der Bildinformationswerte einer in horizontaler Richtung unmittelbar benachbarten 4x2-Bildpunktmatrix subtrahiert werden. Für den Filterkoeffizienten $HP^{H}{}_{4x4}$ des Bildpunktes (x, y) gilt:

$$HP^{H}{}_{4\times4}(x,y)=\sum_{i=0}^{1}\sum_{j=0}^{3}P(x+i,y+j)-\sum_{i=0}^{1}\sum_{j=0}^{3}P(x+2+i,y+j) \qquad (1d).$$

Bezug nehmend auf Figur 2E wird ein fünfter Filterkoeffizient $HP^{V}{}_{4x4}$, der nachfolgend auch als vertikaler 4x4-Filterkoeffizient bezeichnet wird, erhalten, indem die Bildinformationswerte einer 2x4-Bildpunktmatrix addiert und von der hierdurch erhaltenen Summe die Summe der Bildinformationswerte einer in vertikaler Richtung unmittelbar benachbarten 2x4-Bildpunktmatrix subtrahiert werden. Für diesen vertikalen 4x4-Filterkoeffizienten des Bildpunktes (x, y) gilt somit:

$$HP^{V}{}_{4\times4}(x,y)=\sum_{i=0}^{3}\sum_{j=0}^{1}P(x+i,y+j)-\sum_{i=0}^{3}\sum_{j=0}^{1}P(x+i,y+2+j) \qquad (1e).$$

Bezug nehmend auf Figur 2F wird ein sechster Filterkoeffizient $HP^{D}{}_{4x4}$, der nachfolgend auch als diagonaler 4x4-Filterkoeffizient bezeichnet wird, erhalten, indem die Bildinformationswerte der Bildpunkte zweier in diagonaler Richtung benachbarter 2x2-Bildpunktmatrizes addiert werden und indem von der hierdurch erhaltenen Summe die Summe der Bildpunktdifferenzen zweier weiterer 2x2-Bildpunktmatrizes subtrahiert werden, die sich unmittelbar an die beiden zuerst genannten 2x2-Matrizes anschließen. Für diesen diagonalen 4x4-Filterkoeffizienten des Bildpunktes (x, y) gilt also:

$$HP^D_{4\times4}(x,y) = \sum_{i=0}^{1}\sum_{j=0}^{1}P(x+i,y+j) + \sum_{i=0}^{1}\sum_{j=0}^{1}P(x+2+i,y+2+j) -$$

$$\sum_{i=0}^{1}\sum_{j=0}^{1}P(x+2+i,y+j) - \sum_{i=0}^{1}\sum_{j=0}^{1}P(x+i,y+2+j) \qquad (1f).$$

Ein siebter Filterkoeffizient $HP^H_{4x8}$ wird Bezug nehmend auf Figur 2G erhalten, indem die Bildinformationswerte der Bildpunkte einer 4x4-Bildpunktmatrix addiert werden und indem die Summe der Bildinformationswerte der Bildpunkte einer in horizontaler Richtung unmittelbar benachbarten 4x4-Bildpunktmatrix subtrahiert werden. Für diesen Filterkoeffizienten $HP^H_{4x8}$, der nachfolgend auch als horizontaler 4x8-Filterkoeffizient bezeichnet wird, des Bildpunktes (x, y) gilt:

$$HP^H_{4\times8}(x,y) = \sum_{i=0}^{3}\sum_{j=0}^{3}P(x+i,y+j) - \sum_{i=0}^{3}\sum_{j=0}^{3}P(x+4+i,y+j) \qquad (1g).$$

Die zuvor erläuterten Filterkoeffizienten sind Hochpassfilterkoeffizienten bzw. im Fall des horizontalen 4x8-Filterkoeffizienten Bandpassfilterkoeffizienten. Bezug nehmend auf Figur 2H wird ein achter Filterkoeffizienten $LP_{4x8}$, der ein Tiefpassfilterkoeffizient ist, erhalten, indem die Bildinformationswerte der Bildpunkte einer 4x8-Bildpunktmatrix addiert werden. Für diesen Tiefpassfilterkoeffizienten des Bildpunktes (x, y) gilt:

$$LP_{4\times8}(x,y) = \sum_{i=0}^{7}\sum_{j=0}^{3}P(x+i,y+j) \qquad (1h).$$

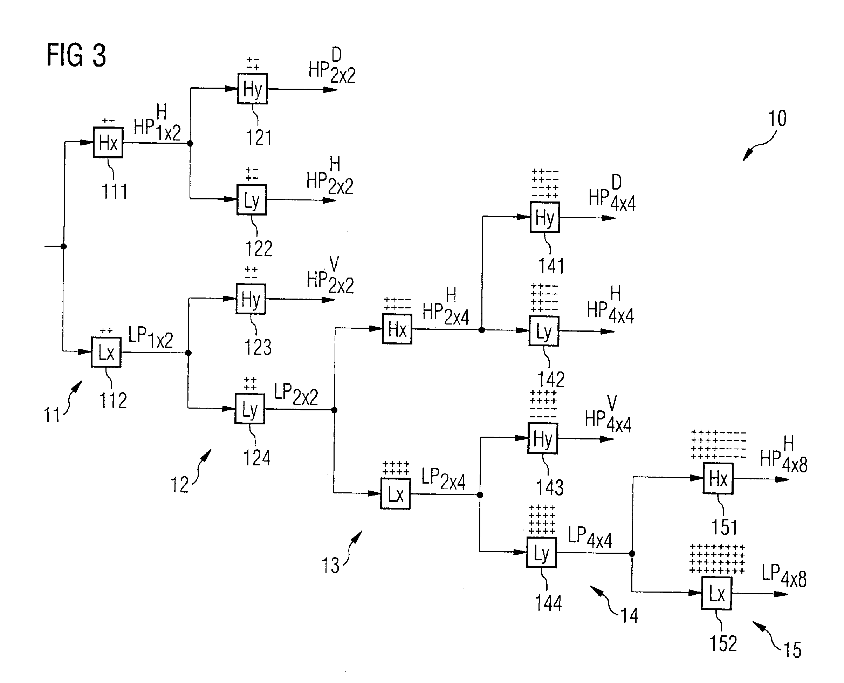

Figur 3 zeigt schematisch ein Beispiel einer Filterbank, durch welche die zuvor erläuterten acht Filterkoeffizienten auf besonders effektive Weise, d. h. mit geringem Rechenaufwand, ermittelt werden können. Die dargestellte Filterbank umfasst fünf aufeinanderfolgende Filterstufen 11-15 mit jeweils mehreren Filtern pro Filterstufe. Die Filter der Filterstufen 11-15 sind in dem Beispiel als sogenannte Haar-Filter realisiert. Die Ergebnisse einigere Filter der einzelnen Filterstufen werden bei der dargestellten Filterbank durch Filter darauffolgender Filterstufen weiter verwendet, was die besondere Effizienz der dargestellten Filterbank ausmacht. Als Eingangswerte sind der dargestellten Filterbank die Bildinformationswerte der einzelnen Bildpunkte des zu filternden Bildes zugeführt. Die einzelnen Filter sind in dem dargestellten Beispiel durch Buchstabencodes mit zwei Buchstaben näher spezifiziert. Der erste Buchstabe steht hierbei für die Art der Filterung, wobei "H" für eine Hochpassfilterung und "L" für eine Tiefpassfilterung steht. Der zweite Buchstabe steht für die jeweilige Richtung der Filterung innerhalb der Bildpunktmatrix, wobei "x" für eine horizontale Filterung und "y" für eine vertikale Filterung steht.

In einer ersten Filterstufe 11 der Filterbank 10 wird zu jedem Bildpunkt ein horizontaler Hochpassfilterwert $HP^H_{1x2}$ durch ein erstes Filter 111 und ein horizontaler Tiefpassfilter $LP_{1x2}$ durch und ein zweites Filter 112 dieser Filterstufe ermittelt. Der Hochpassfilterwert wird hierbei durch Subtraktion der Bildinformationswerte zweier in horizontaler Richtung unmittelbar benachbarter Bildpunkte erhalten, es gilt also:

$$HP^H_{1\times2}(x,y) = P(x,y) - P(x+1,y) \qquad (2a).$$

$$HP^D{}_{2\times2}(x,y) = HP^H{}_{1\times2}(x,y) - HP^H{}_{1\times2}(x,y+1) \qquad (2a).$$

Der Tiefpassfilterwert $LP_{1\times2}$ wird durch Addition der Bildinformationswerte dieser in horizontaler Richtung benachbarten Bildpunkte erhalten, es gilt also:

$$LP_{1\times2}(x,y) = P(x,y) + P(x+1,y) \qquad (2b).$$

$$HP^H{}_{2\times2}(x,y) = HP^H{}_{1\times2}(x,y) + HP^H{}_{1\times2}(x,y+1) \qquad (2b).$$

Die an den Ausgängen dieser Filter 111, 112 zur Verfügung stehenden Filterkoeffizienten $HP^H{}_{1\times2}$, $LP_{1\times2}$ werden in einer nachfolgenden zweiten Filterstufe 12 durch Hochpassfilter 121, 123 in vertikaler Richtung hochpassgefiltert und durch Tiefpassfilter 122, 124 in vertikaler Richtung tiefpassgefiltert. Durch die Tiefpassfilterung werden die am Ausgang der ersten Filterstufe 11 zur Verfügung stehenden Filterkoeffizienten zweier in vertikaler Richtung benachbarter Bildpunkte addiert, während durch die Hochpassfilterung die am Ausgang der ersten Filterstufe zur Verfügung stehenden Filterkoeffizienten zweier in vertikaler Richtung benachbarter Bildpunkte subtrahiert werden. Am Ausgang des ersten Hochpassfilters 121, dem die Hochpassfilterwerte der ersten Filterstufe 11 zugeführt werden, stehen die anhand von Figur 2C erläuterten diagonalen 2x2-Filterkoeffizienten zur Verfügung. Die Ermittlung dieser Filterkoeffizienten erfolgt bei der in Figur 3 dargestellten Filterbank abhängig von den Hochpassfilterkoeffizienten $HP^H{}_{1\times2}$ der ersten Filterstufe gemäß:

$$HP^D{}_{2\times2}(x,y) = HP^H{}_{1\times2}(x,y) - HP^H{}_{1\times2}(x,y+1) \qquad (2c).$$

Am Ausgang des ersten Tiefpassfilters 122 der zweiten Filterstufe 12, der die Hochpassfilterkoeffizienten $HP^H{}_{1\times2}$ der ersten Filterstufe 11 zugeführt sind, stehen die horizontalen 2x2-Filterkoeffizienten $HP^H{}_{2\times2}$ zur Verfügung. Für die Ermittlung dieser Filterkoeffizienten gilt bei der in Figur 3 dargestellten Filterbank 10 abhängig von den Hochpassfilterkoeffizienten der ersten Filterstufe 11:

$$HP^H{}_{2\times2}(x,y) = HP^H{}_{1\times2}(x,y) + HP^H{}_{1\times2}(x,y+1) \qquad (2d).$$

Am Ausgang des zweiten Hochpassfilters 123 der zweiten Filterstufe 12, dem die Tiefpassfilterkoeffizienten $LP_{1\times2}$ der ersten Filterstufe 11 zugeführt sind, stehen die vertikalen 2x2-Filterkoeffizienten $HP^V{}_{2\times2}$ zur Verfügung. Für diese vertikalen Filterkoeffizienten $HP^V{}_{2\times2}$ gilt abhängig von den Tiefpassfilterkoeffizienten $LP_{1\times2}$ der ersten Filterstufe 11:

$$HP^V{}_{2\times2}(x,y) = LP_{1\times2}(x,y) - LP_{1\times2}(x,y+1) \qquad (2c).$$

Am Ausgang des zweiten Tiefpassfilters 124 der zweiten Filterstufe 12 stehen 2x2-Tiefpassfilterkoeffizienten $LP_{2\times2}$ zur Verfügung, die in einer nachfolgenden dritten Filterstufe 13 weiter verarbeitet werden. Für diese 2x2-Tiefpassfilterkoeffizienten $LP_{2\times2}$ abhängig von den durch die erste Filterstufe 11 bereitgestellten Tiefpassfilterkoeffizienten

LP$_{1x2}$ gilt:

$$LP_{2\times2}(x,y) = LP_{1\times2}(x,y) + LP_{1\times2}(x,y+1) \qquad\qquad (2d).$$

Die Tiefpassfilterkoeffizienten LP$_{2x2}$ der zweiten Filterstufe 12 werden in der nachfolgenden dritten Filterstufe 13 mittels eines Hochpassfilters 131 in horizontaler Richtung hochpassgefiltert und mittels eines Tiefpassfilters 132 in horizontaler Richtung tiefpassgefiltert. Unter "horizontaler Hochpassfilterung" ist hierbei zu verstehen, dass die Tiefpassfilterkoeffizienten LP$_{2x2}$ zweier in horizontaler Richtung benachbarter Bildpunkte subtrahiert werden. Unter "horizontaler Tiefpassfilterung" ist zu verstehen, dass die Tiefpassfilterwerte LP$_{2x2}$ zweier in horizontaler Richtung benachbarter Bildpunkte addiert werden. An den Ausgängen der beiden Filter 131, 132 stehen Hochpassfilterkoeffizienten HP$^H_{2x4}$ und Tiefpassfilterkoeffizienten LP$_{2x4}$ zur Verfügung, die jeweils in einer nachfolgenden vierten Filterstufe 14 weiterverarbeitet werden. Für die Hochpassfilterkoeffizienten HP$^H_{2x4}$ der dritten Filterstufe 13 gilt abhängig von den Tiefpassfilterkoeffizienten LP$_{2x2}$ der zweiten Filterstufe 12:

$$HP^H_{2\times4} = LP_{2\times2}(x,y) - LP_{2\times2}(x+2,y) \qquad\qquad (3a).$$

Subtrahiert werden also die Tiefpassfilterkoeffizienten LP$_{2x2}$ jeweils zweier Bildpunkte, die in horizontaler Richtung einen Bildpunktabstand von 2 aufweisen. Entsprechend gilt für die Tiefpassfilterkoeffizienten LP$_{2x4}$ der dritten Filterstufe 13:

$$LP_{2\times4} = LP_{2\times2}(x,y) + LP_{2\times2}(x+2,y) \qquad\qquad (3b).$$

Addiert werden also die Tiefpassfilterkoeffizienten LP$_{2x2}$ solcher Bildpunkte, die in horizontaler Richtung einen Bildpunktabstand von 2 aufweisen.

Die der dritten Filterstufe 13 nachfolgende vierte Filterstufe 14 weist ein erstes Hochpassfilter 141 und ein erstes Tiefpassfilter 142 auf, denen die Hochpassfilterkoeffizienten HP$^H_{2x4}$ der dritten Filterstufe 13 zugeführt sind, und ein zweites Hochpassfilter 143 und ein zweites Tiefpassfilter 144 auf, denen die Tiefpassfilterkoeffizienten LP$_{2x4}$ der dritten Filterstufe 13 zugeführt sind. Am Ausgang des ersten Hochpassfilters 141 stehen die diagonalen 4x4-Filterkoeffizienten HP$^D_{4x4}$ zur Verfügung. Für diese Filterkoeffizienten gilt abhängig von den Hochpassfilterkoeffizienten HP$^H_{2x4}$ der dritten Filterstufe 13:

$$HP^D_{4\times4} = HP^H_{2\times4}(x,y) - HP^H_{2\times4}(x,y+2) \qquad\qquad (4a).$$

Subtrahiert werden zur Erzeugung dieser 4x4-Filterkoeffizienten also die Hochpassfilterkoeffizienten HP$^H_{2x4}$ von zwei Bildpunkten, die in vertikaler Richtung einen Bildpunktabstand von 2 aufweisen.

Am Ausgang des ersten Tiefpassfilters 142 der vierten Filterstufe 14 stehen die horizontalen 4x4-Filterkoeffizienten HP$^H_{4x4}$ zur Verfügung. Für diese Filterkoeffizienten gilt abhängig von den Hochpassfilterkoeffizienten HP$^H_{2x4}$ der dritten Filterstufe 13:

$$HP^H_{4\times4} = HP^H_{2\times4}(x,y) + HP^H_{2\times4}(x,y+2) \qquad\qquad (4b).$$

Addiert werden zur Erzeugung dieser Filterkoeffizienten HP$^H_{4x4}$ also die Hochpassfilterkoeffizienten HP$^H_{2x4}$ zweier Bildpunkte, die in vertikaler Richtung des Bildes einen Bildpunktabstand von 2 Bildpunkten aufweisen.

Am Ausgang des zweiten Hochpassfilters 143 stehen die vertikalen 4x4-Filterkoeffizienten $HP^V_{4x4}$ zur Verfügung. Für diese Filterkoeffizienten gilt abhängig von den Tiefpassfilterkoeffizienten $LP_{2x4}$ der dritten Filterstufe 13:

$$HP^V_{4\times4} = LP_{2\times4}(x, y) - LP_{2\times4}(x, y + 2) \qquad (4c).$$

Zur Bildung dieser Filterkoeffizienten $HP^V_{4x4}$ werden also die Tiefpassfilterkoeffizienten $LP_{2x4}$ zweier Bildpunkte subtrahiert, die in vertikaler Richtung einen Bildpunktabstand von zwei Bildpunkten aufweisen.

Am Ausgang des zweiten Tiefpassfilters 144 steht ein 4x4-Tiefpassfilterkoeffizient zur Verfügung, der durch Addition zweier Tiefpassfilterkoeffizienten $LP_{2x4}$ der dritten Filterstufe 13 erzeugt wird. Für diese 4x4-Tiefpassilterkoeffizienten gilt dabei:

$$LP_{4\times4} = LP_{2\times4}(x, y) + LP_{2\times4}(x, y + 2) \qquad (4d).$$

Diese 4x4-Tiefpassfilterkoeffizienten sind einer fünften und letzten Stufe der Filterbank 10 zugeführt, die ein Hochpassfilter 151 und ein Tiefpassfilter 152 aufweist. Am Ausgang des Hochpassfilters 151 stehen die 4x8-Filterkoeffizienten $HP^H_{4x8}$ zur Verfügung. Für diese Filterkoeffizienten gilt in Abhängigkeit von den Tiefpassfilterkoeffizienten $LP_{4x4}$ der vierten Filterstufe 14:

$$HP^H_{4\times8} = LP_{4\times4}(x, y) - LP_{4\times4}(x + 4, y) \qquad (5a).$$

Zur Erzeugung dieser horizontalen 4x8-Filterkoeffizienten werden also die 4x4-Tiefpassfilterkoeffizienten $LP_{4x4}$ zweier Bildpunkte subtrahiert, die in horizontaler Richtung des Bildes einen Bildpunktabstand von 4 Bildpunkten aufweisen. Am Ausgang des Tiefpassfilters 152 stehen die anhand von Figur 2H erläuterten 4x8-Tiefpassfilterkoeffizienten zur Verfügung. Für diese 4x8-Tiefpassfilterkoeffizienten gilt abhängig von den 4x4-Tiefpassfilterkoeffizienten der vierten Filterstufe 14:

$$LP_{4\times8} = LP_{4\times4}(x, y) + LP_{4\times4}(x + 4, y) \qquad (5b).$$

Zur Erzeugung dieser 4x8-Filterkoeffizienten werden also die 4x4-Tiefpassfilterkoeffizienten zweier Bildpunkte addiert, die in horizontaler Richtung einen Bildpunktabstand von vier Bildpunkten aufweisen.

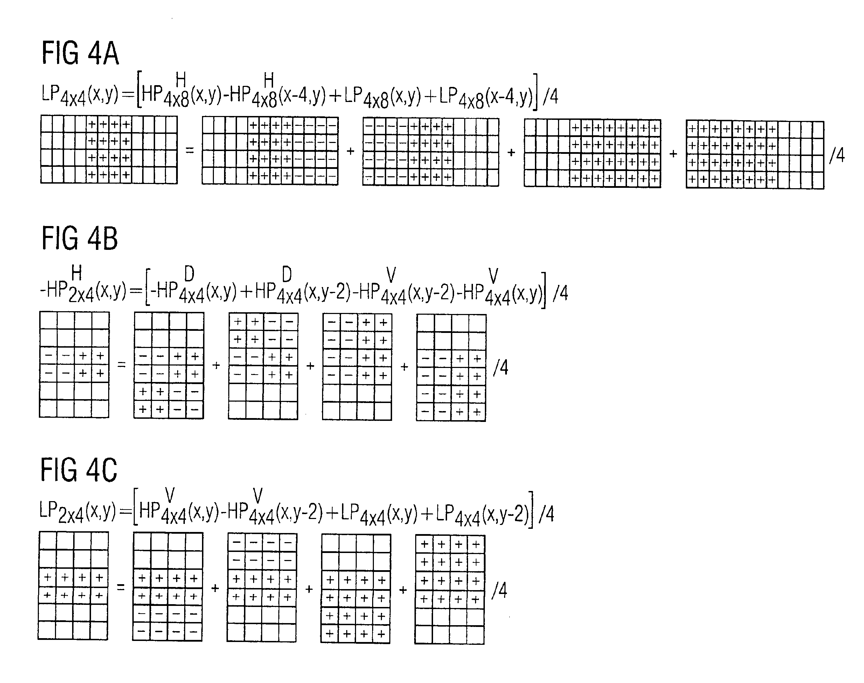

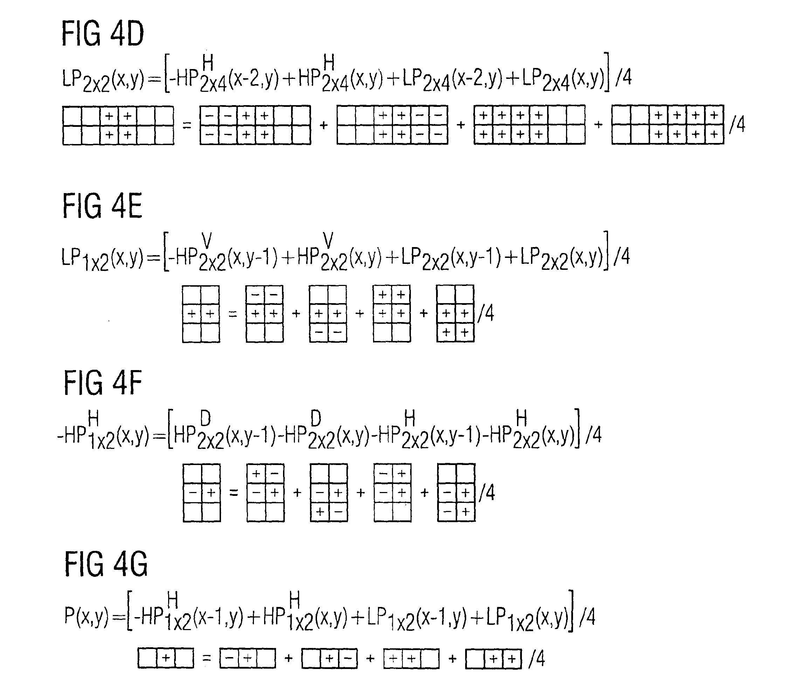

Aus den anhand der Figuren 2A bis 2H erläuterten acht Filterkoeffizienten, die für die einzelnen Bildpunkte ermittelt wurden, lassen sich die Bildinformationswerte P der einzelnen Bildpunkte wieder rekonstruieren bzw. synthetisieren. Das grundsätzliche Verfahren zur Synthese dieser Bildinformationswerte aus den ermittelten Filterkoeffizienten wird nachfolgend anhand der Figuren 4A bis 4G erläutert, bevor auf die Modifikation einzelner Filterkoeffizienten mit dem Ziel einer Artefaktreduktion eingegangen wird. Die anhand von Figur 4 erläuterte Synthese umfasst in dem dargestellten Beispiel sieben Syntheseschritte, von denen jeweils einer anhand einer der Figuren 4A-4G erläutert wird. In diesen Figuren sind Synthesegleichungen wiedergegeben, die sukzessive die Synthese der Bildinformationswerte aus Filterkoeffizienten und aus Zwischenwerten, die von den Filterkoeffizienten abhängen, beschreiben. Schematisch dargestellt sind in diesen Figuren zu den einzelnen Filterkoeffizienten und Zwischenwerten auch Bildpunktmatrizes, die die Lage der einzelnen Bildpunkte darstellen, deren Bildinformationswerte in den einzelnen Filterkoeffizienten oder Zwischenwerten berücksichtigt sind. Die Bildinformationswerte der mit einem "+" gekennzeichneten Bildpunkte sind hierbei mit positivem Vorzeichen und die Bildinformationswerte der mit einem "-" gekennzeichneten Bildpunkte sind hierbei mit negativem Vorzeichen in dem jeweiligen Filterkoeffizienten bzw. dem jeweiligen Zwischenwert berücksichtigt.

Bezug nehmend auf Figur 4A werden in einem ersten Syntheseschritt 4x4-Tiefpassfilterkoeffizienten $LP_{4x4}$ aus horizontalen 4x8-Filterwerten $HP^H_{4x8}$ und aus 4x8-Tiefpassfilterwerten ermittelt. Diese Filterwerte $HP^H_{4x8}$ und $LP_{4x8}$ sind zu den einzelnen Bildpunkten nach der anhand von Figur 2 erläuterten Analyse vorhanden bzw. den Bildpunkten zugeordnet. Der 4x4-Tiefpassfilterwert ist ein Zwischenwert, der für die Synthese der Bildinformationswerte benötigt wird. Für die Ermittlung dieses Zwischenwertes $LP_{4x4}$ werden die Hochpass- und Tiefpassfilterwerte von jeweils zwei Bildpunkten berücksichtigt, die in horizontaler Richtung einen Bildpunktabstand von 4 Bildpunkten aufweisen. Für die Ermittlung dieses Zwischenwertes $LP_{4x4}$ für den Bildpunkt (x, y) gilt hierbei:

$$LP_{4\times4}(x,y)=[HP^{H}_{4\times8}(x,y)-HP^{H}_{4\times8}(x-4,y)+LP_{4\times8}(x,y)+LP_{4\times8}(x-4,y)]/4 \qquad (6a).$$

Der so ermittelte Tiefpassfilterwert $LP_{4x4}$ wird in einem anhand von Figur 4C erläuterten weiteren Syntheseschritt benötigt.

In einem weiteren Syntheseschritt, der in Figur 4B schematisch dargestellt ist, werden horizontale 2x4-Filter-koeffizienten aus abgespeicherten diagonalen 4x4-Filterkoeffizienten und aus vertikalen 4x4-Filterkoeffizienten von zwei Bildpunkten, die in vertikaler Richtung einen Bildpunktabstand von zwei Bildpunkten aufweisen, ermittelt. Diese horizontalen 2x4-Hochpassfilterkoeffizienten $HP^{H}_{2x4}$ sind zweite Zwischenwerte, die in einem anhand von Figur 4D noch erläuterten Syntheseschritt benötigt werden. Für diese Zwischenwerte gilt:

$$-HP^{H}_{2\times4}(x,y)=[-HP^{D}_{4\times4}(x,y)+HP^{D}_{4\times4}(x,y-2)-HP_{4\times4}(x,y-2)-HP^{V}_{4\times4}(x,y)]/4 \quad (6b).$$

Figur 4C erläutert einen weiteren Syntheseschritt, bei dem 2x4-Tiefpassfilterkoeffizienten aus zu den einzelnen Bildpunkten abgespeicherten vertikalen 4x4-Filterkoeffizienten $HP^{V}_{4x4}$ und aus den anhand des Syntheseschritts gemäß Figur 4A ermittelten ersten Zwischenwerten $LP_{4x4}$ ermittelt werden. Berücksichtigt werden hierbei die vertikalen 4x4-Hochpassfilterwerte und die Zwischenwerte zu zwei Bildpunkten, die in vertikaler Richtung des Bildes einen Bildpunktabstand von zwei Bildpunkten aufweisen. Für die anhand dieses Syntheseschrittes ermittelten 2x4-Tiefpassfilterwerte, die dritte Zwischenwerte darstellen, gilt hierbei:

$$LP_{2\times4}(x,y)=[HP^{V}_{4\times4}(x,y)-HP^{V}_{4\times4}(x,y-2)+LP_{4\times4}(x,y)+LP_{4\times4}(x,y-2)]/4 \qquad (6c)$$

Bezug nehmend auf Figur 4D werden in einem weiteren Syntheseschritt 2x2-Tiefpassfilterkoeffizienten, die weitere Zwischenwerte darstellen, anhand abgespeicherter horizontaler 2x4-Hochpassfilterwerte und anhand der des Syntheseschrittes gemäß Figur 4C ermittelten Zwischenwerte $LP_{2x4}$ berechnet. Berücksichtigt werden hierbei die hori-zontalen Hochpassfilterwerte $HP^{H}_{2x4}$ und die Zwischenwerte zu jeweils zwei Bildpunkten, die in horizontaler Richtung einen Bildpunktabstand von zwei Bildpunkten aufweisen. Für die bei dem in Figur 4D dargestellten synthetisch ermittelten Zwischenwerte gilt:

$$LP_{2\times2}(x,y)=[-HP^{H}_{2\times4}(x-2,y)+HP^{H}_{2\times4}(x,y)+LP_{2\times4}(x-2,y)+LP_{2\times4}(x,y)]/4 \qquad (6d).$$

In einem weiteren Syntheseschritt, der in Figur 4E dargestellt ist, werden 1x2-Tiefpassfilterwerte als weitere Zwischenwerte ermittelt. Für die Ermittlung dieser Zwischenwerte werden vertikale 2x2-Hochpassfilterwerte, die zu den einzelnen Bildpunkten abgespeichert sind, und die anhand des Syntheseschrittes gemäß Figur 4D ermittelten 2x2-Tiefpassfilterwerte verwendet. Berücksichtigt werden hierbei jeweils die Hochpassfilterwerte und Tiefpassfilterwerte zu zwei Bildpunkten, die in horizontaler Richtung des Bildes einen Bildabstand von einem Bildpunkt aufweisen, die also unmittelbar benachbart sind. Für die bei diesem Syntheseschritt ermittelten Zwischenwerte $LP_{1x2}$ gilt abhängig von den vertikalen Hochpassfilterwerten $HP^{V}_{2x2}$ und abhängig von den 2x2-Tiefpassfilterwerten:

$$LP_{1x2}(x,y) = [-HP^V{}_{2x2}(x,y-1) + HP^V{}_{2x2}(x,y) + LP_{2x2}(x,y-1) + LP_{2x2}(x,y)]/4 \qquad (6e).$$

In einem weiteren Syntheseschritt werden Bezug nehmend auf Figur 4F horizontale 1x2-Hochpassfilterwerte, die als Zwischenwerte für einen anhand von Figur 4G erläuterten letzten Syntheseschritt dienen, aus zu den einzelnen Bildpunkten abgespeicherten diagonalen 2x2-Hochpassfilterwerten und aus horizontalen 2x2-Filterwerten berechnet. Berücksichtigt werden hierbei jeweils die diagonalen und horizontalen 2x2-Hochpassfilterkoeffizienten zu zwei Bildpunkten, die in vertikaler Richtung des Bildes einen Bildpunktabstand von einem Bildpunkt aufweisen, die also in vertikaler Richtung unmittelbar benachbart zueinander angeordnet sind. Für einen zu einem Bildpunkt (x, y) ermittelten horizontalen 1x2-Hochpassfilterwert $HP^H{}_{1x2}$ gilt hierbei:

$$-HP^H{}_{1x2}(x,y) = [HP^D{}_{2x2}(x,y-1) - HP^D{}_{2x2}(x,y) - HP^H{}_{2x2}(x,y-1) - HP^H{}_{2x2}(x,y)]/4 \qquad (6f).$$

In einem letzten Syntheseschritt, der in Figur 4G dargestellt ist, werden die Bildinformationswerte aus den horizontalen 1x2-Hochpassfilterwerten $HP^H{}_{1x2}$ des Syntheseschrittes gemäß Figur 4F und aus den 1x2-Tiefpassfilterwerten $LP_{1x2}$ des Syntheseschrittes gemäß Figur 4E berechnet. Berücksichtigt werden hierbei die Hochpass- und Tiefpassfilterwerte von jeweils zwei Bildpunkten, die in horizontaler Richtung einen Bildpunktabstand von jeweils einem Bildpunkt aufweisen, die in horizontaler Richtung also unmittelbar benachbart zueinander angeordnet sind. Für den aus diesen Filterkoeffizienten ermittelten Bildinformationswert P gilt dabei:

$$P(x,y) = [-HP^H{}_{1x2}(x-1,y) + HP^H{}_{1x2}(x,y) + LP_{1x2}(x-1,y) + LP_{1x2}(x,y)]/4 \qquad (6g).$$

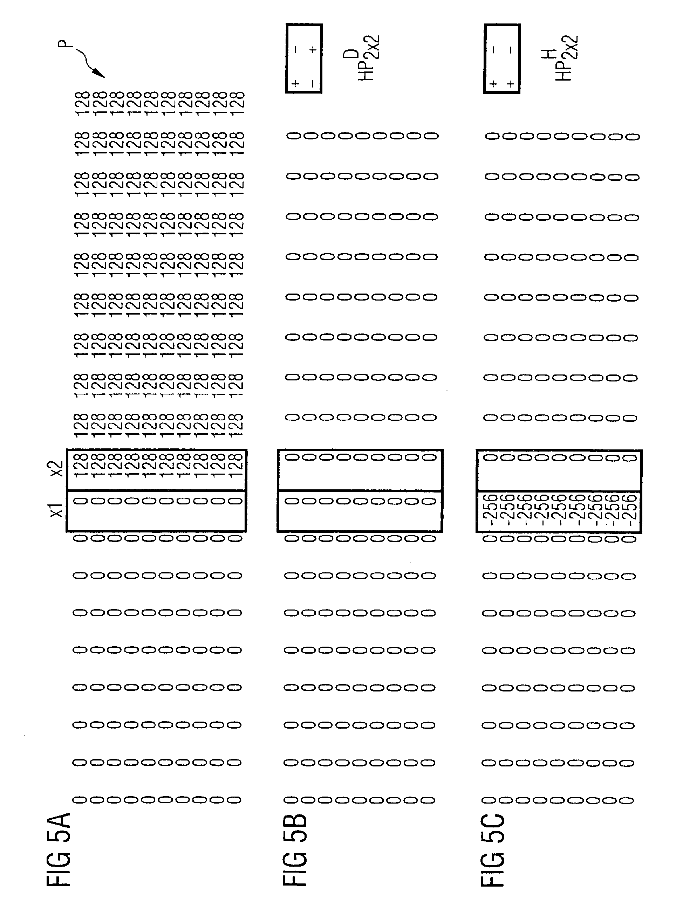

Die Auswirkung einer in vertikaler Richtung durch das Bild verlaufenden Kante auf die einzelnen Filterkoeffizienten werden nachfolgend anhand der Figuren 5A bis 5J erläutert. Figur 5A zeigt eine Matrix mit Bildinformationswerten, wobei für die nachfolgende Erläuterung angenommen sei, dass die in einer Zeile angeordneten Bildinformationswerte von Bildpunkten einer Zeile der Bildpunktmatrix gemäß Figur 1 sind. Eine solche Kante im Bildverlauf entsteht, wenn ein sprunghafter Wechsel von Bildinformationswerten zwischen zwei bestimmten Spalten der Bildpunktmatrix vorliegt. Bei der Bildpunktmatrix gemäß Figur 5A liegt eine vertikale Kante im Bildverlauf zwischen Spalten x1, x2 der Bildpunktmatrix vor. Dies ist in Figur 5A dadurch dargestellt, dass Bildinformationswerte von Bildpunkten der Spalte x1 und von Spalten links dieser Spalte x1 einen ersten Bildinformationswert, in dem Beispiel 0, und dass Bildinformationswerte von Bildpunkten der Spalte x2 und von rechts zu der Spalte x2 benachbarten Spalten einen zweiten Bildinformationswert, in dem Beispiel 128, aufweisen. Die in Figur 5A wiedergegebenen Bildinformationswerte sind beispielsweise Helligkeitswerte, wobei der kleine Wert (0) beispielsweise für eine geringe Helligkeit bzw. für schwarze Bildpunkte und der große Helligkeitswert (128) für eine hohe Helligkeit bzw. weiße Bildpunkte steht. Je nach Realisierung des Systems können selbstverständlich auch niedrige Helligkeitswerte für hohe Helligkeiten und hohe Helligkeitswerte für niedrige Helligkeiten stehen.

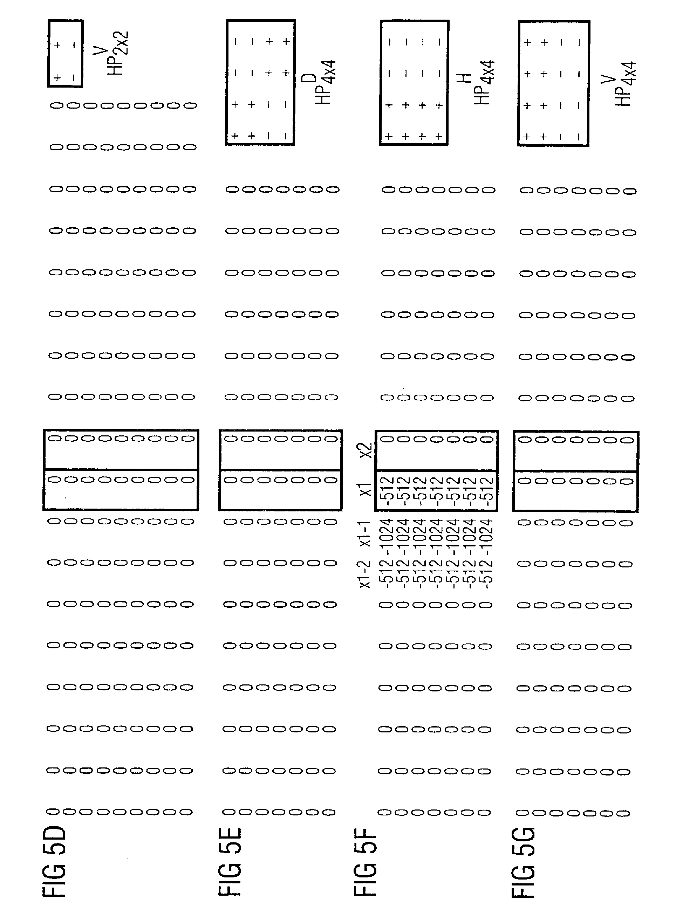

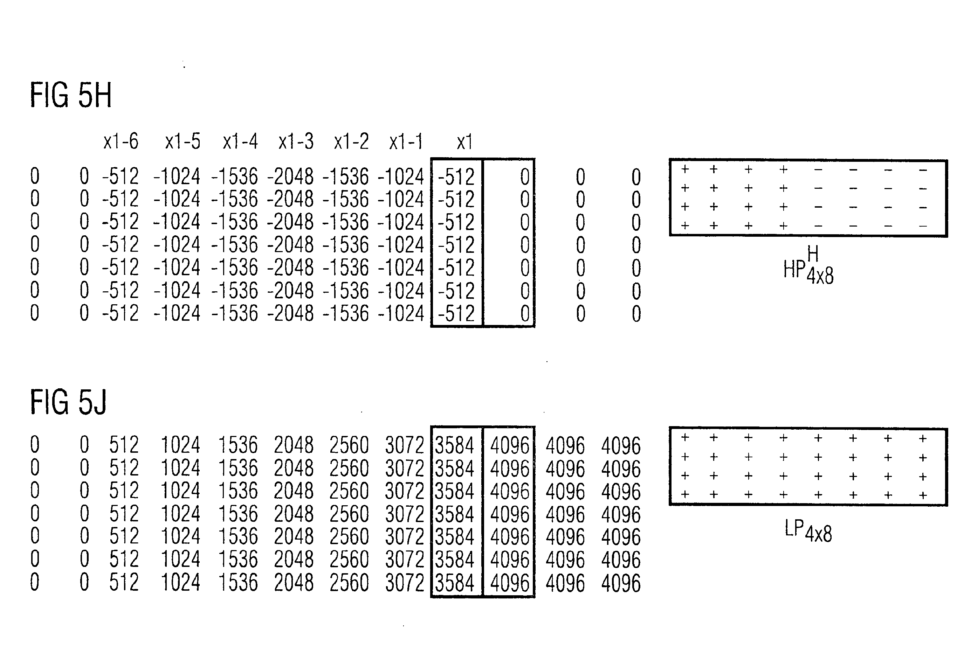

In den Figuren 5B bis 5J sind unter Berücksichtigung der in Figur 5A angegebenen Bildinformationswerte die diagonalen 2x2-Filterkoeffizienten $HP^D{}_{2x2}$ (Figur 5B), die horizontalen 2x2-Filterkoeffizienten $HP^H{}_{2x2}$ (Figur 5C), die vertikalen 2x2-Filterkoeffizienten $HP^V{}_{2x2}$ (Figur 5D), die diagonalen 4x4-Filterkoeffizienten $HP^D{}_{4x4}$ (Figur 5E), die horizontalen 4x4-Filterkoeffizienten $HP^H{}_{4x4}$ (Figur 5F), die vertikalen 4x4-Filterkoeffizienten $HP^V{}_{4x4}$ (Figur 5G), die horizontalen 4x8-Filterkoeffizienten $HP^H{}_{4x8}$ (Figur 5H) und die Tiefpassfilterkoeffizienten $LP_{4x8}$ (Figur 5J) für die einzelnen Bildpunkte der Bildpunktmatrix dargestellt. Zur besseren Orientierung sind die Bildinformationswerte (Figur 5A) und die Filterkoeffizienten (Figuren 5B bis 5J) für die Bildpunkte der Spalten x1, x2, zwischen denen eine sprunghafte Änderung der Bildinformationswerte vorliegt, jeweils umrandet dargestellt.

Für die in Figur 5A dargestellte Situation mit ersten Bildinformationswerten für Bildpunkte links der Kante und zweiten Bildinformationswerten für Bildpunkte rechts der Kante sind die diagonalen und vertikalen Filterkoeffizienten jeweils 0, wie in den Figuren 5B, 5D, 5E und 5G dargestellt ist. Ungleich 0 sind für die in Figur 5A dargestellte Situation die horizontalen 2x2-Filterkoeffizienten $HP^H{}_{2x2}$ der Bildpunkte der Spalte x1, also der links der vertikalen Kante liegenden Spalte, sowie die horizontalen 4x4-Filterkoeffizienten der links der Kante liegenden Spalte x1 sowie der zwei sich links an diese Spalte x1 anschließenden Spalten x1-1, x1-2. Ungleich 0 sind außerdem die horizontalen 4x4-Filterkoeffizienten der Spalte x1 und der sich links an diese Spalte x1 anschließenden sechs Spalten x1-1,..., x1-6. Ungleich 0 sind zudem die Tiefpassfilterkoeffizienten ausgehend von der Spalte x1-6 nach rechts, die jedoch nachfolgend nicht näher betrachtet werden.

Filterkoeffizienten, - mit Ausnahme der Tiefpassfilterkoeffizienten - die in Folge der Kante zwischen den Spalten x1 und x2 einen Filterkoeffizienten ungleich 0 aufweisen, werden nachfolgend als "durch die Kante angeregte" Filterkoeffizienten bezeichnet. Bei dem dargestellten Beispiel sind dies die zuvor erläuterten horizontalen 2x2-, 4x4- und 4x8-Filterkoeffizienten.

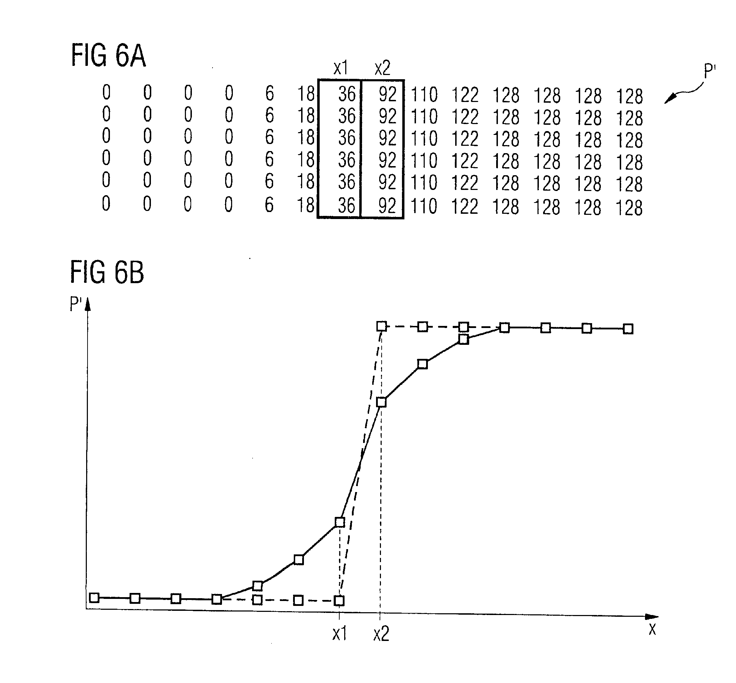

Blockingartefakte sind, wie bereits eingangs erläutert, Kanten bzw. Sprünge im Bildverlauf, die aus einer blockbasierten Datenkompression resultieren. Solche Blockingartefakte können in einem aus den komprimierten Daten rekonstruierten Bild dadurch reduziert werden, dass ein sprungartiger Verlauf der Bildinformationswerte "abgeflacht" wird. Dies kann erreicht werden, indem Filterkoeffizienten, die durch die jeweilige Kante angeregt werden, in ihrer Amplitude reduziert werden. Figur 6A zeigt beispielhaft Bildinformationswerte P', die durch Synthese unter Verwendung der zu jedem Bildpunkt ermittelten Filterkoeffizienten erhalten werden, für den Fall, dass die durch die Kante zwischen den Spalten x1, x2 angeregten horizontalen 2x2-Filterkoeffizienten $HP^H_{2x2}$ (vgl. Figur 5C) und die durch diesen Sprung angeregten horizontalen 4x4-Filterkoeffizienten $HP^H_{4x4}$ (vgl. Figur 5F) auf ein Viertel ihrer Amplitude reduziert werden. Ergebnis ist ein abgeflachter Anstieg der Bildinformationswerte in horizontaler Richtung im Bereich der ursprünglichen Kante zwischen den Spalten x1, x2. Die rekonstruierten Bildinformationswerte P' einer Zeile im Bereich dieses Übergangs sind in Figur 6B als durchgezogenen Linie dargestellt. Die ursprünglichen Bildinformationswerte P gemäß Figur 5A sind hierbei als gestrichelte Linie dargestellte.

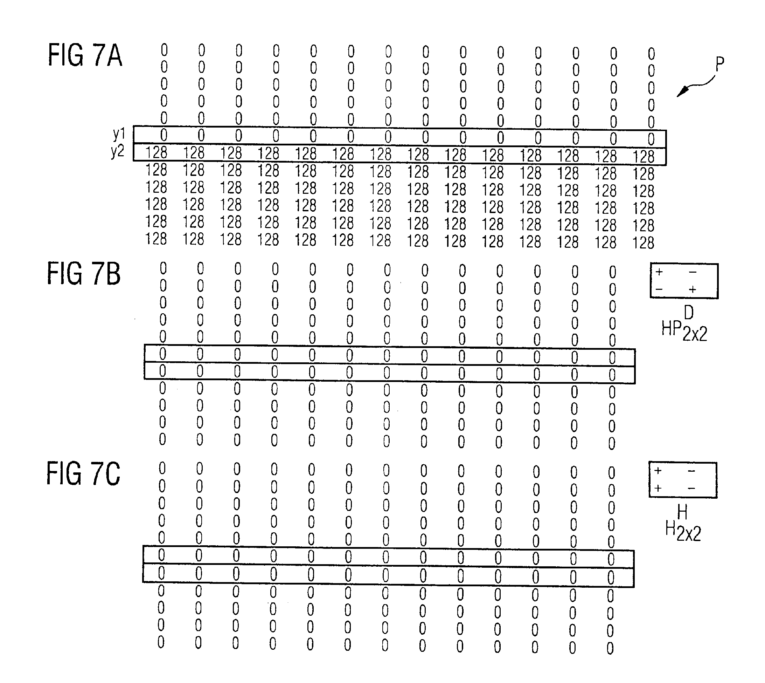

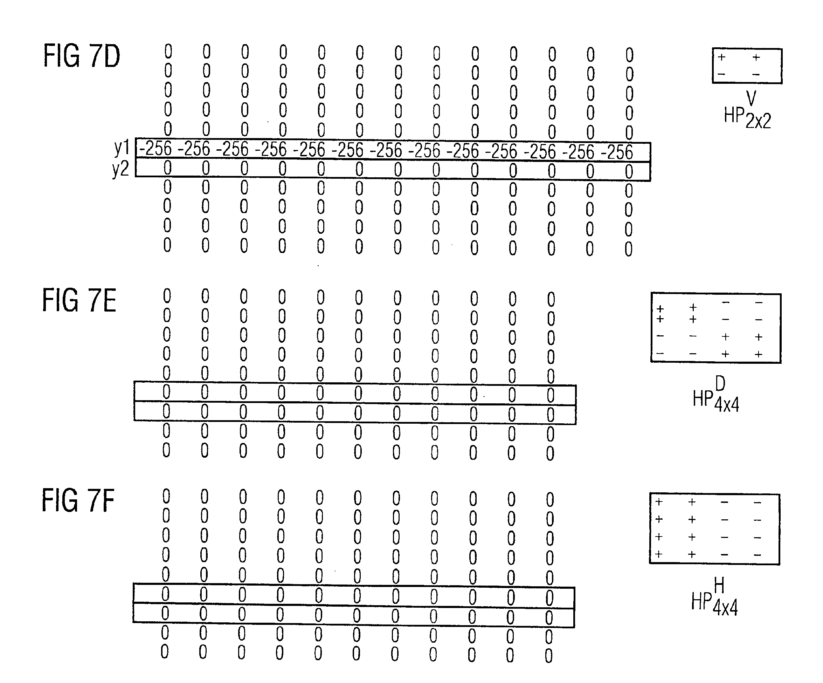

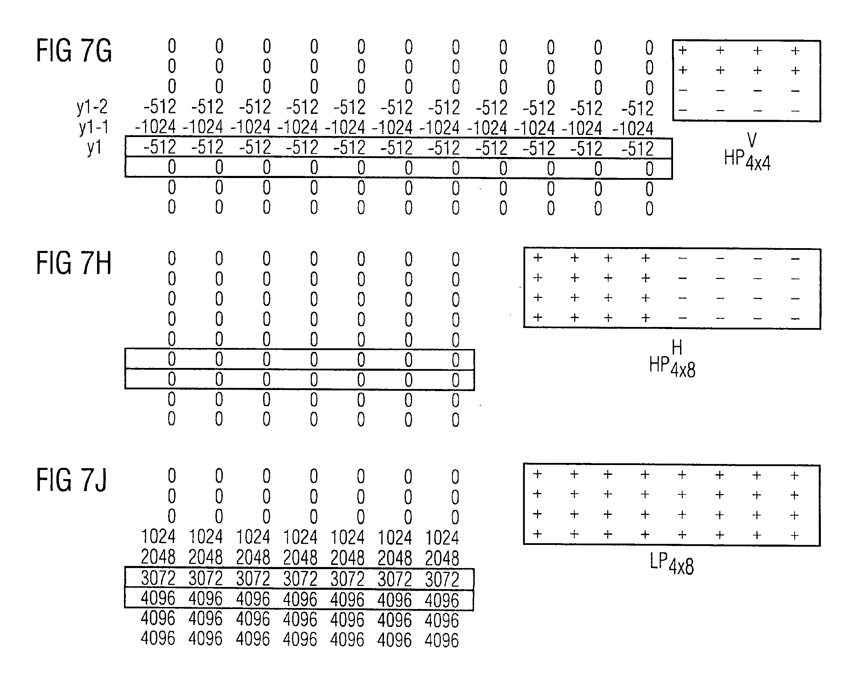

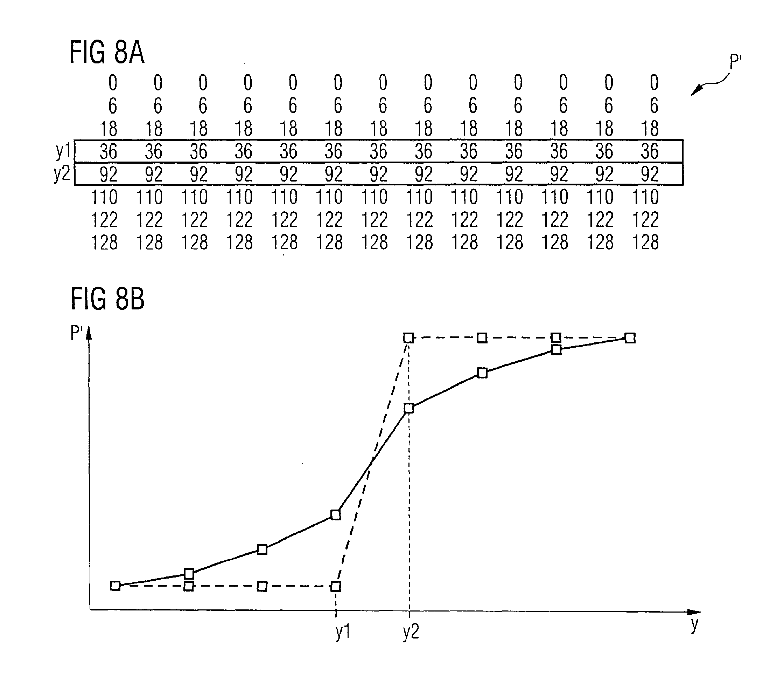

Entsprechend der Darstellung in den Figuren 5A bis 5J veranschaulichen die Figuren 7A bis 7J eine in horizontaler Richtung durch das Bild verlaufende Kante. Diese Kante liegt in dem Beispiel zwischen Bildzeilen y1 und y2. Die Bildinformationswerte der Bildzeile y1 und der oberhalb dieser Bildzeile y1 liegenden Bildzeilen besitzen beispielhaft einen Bildinformationswert 0, während die Bildpunkte der Bildzeile y2 und der in vertikaler Richtung unterhalb dieser Bildzeile y2 liegenden Bildzeilen beispielhaft einen Bildinformationswert 128 aufweisen. Angeregt durch diese zwischen den Zeilen y1 und y2 verlaufende Kante werden Bezug nehmend auf die Figuren 7D und 7G vertikale 2x2-Filterkoeffi-zienten $HP^V_{2x2}$ der Bildzeile y1, sowie vertikale 4x4-Filterkoeffizienten $HP^V_{4x4}$ der Bildzeile y1 und der zwei oberhalb dieser Bildzeile y1 angeordneten Bildzeilen y1-1, y1-2. Figur 8A veranschaulicht die anhand der Filterkoeffizienten rekonstruierten Bildinformationswerte P' für den Fall, dass die angeregten vertikalen 2x2-Filterkoeffizienten (vgl. Figur 7D) und die angeregten vertikalen 4x4-Filterkoeffizienten (vgl. Figur 7G) auf ein Viertel ihrer Amplitude reduziert werden. Ergebnis ist eine im Vergleich zu der Situation gemäß Figur 7A in horizontaler Richtung abgeflachte Kante. Bildinformationswerte einer Spalte im Bereich dieser Kante sind in Figur 8B als durchgezogene Linie dargestellt. Gestrichelt dargestellt ist in Figur 8B der sprungartige Verlauf der Bildinformationswerte innerhalb einer Spalte für die in Figur 7A dargestellte Situation.

Zusammenfassend lassen sich Kanten im Bildverlauf dadurch abflachen, dass durch eine Analyse Filterkoeffizienten zu einzelnen Bildpunkten des Bildes ermittelt werden, dass die durch eine Kante im Bildverlauf angeregten Filterkoeffizienten in ihrer Amplitude reduziert werden und dass die Bildinformationswerte anschließend unter Verwendung der Filterkoeffizienten, von denen einige modifiziert sein können, rekonstruiert werden. Zur Reduktion von Blok-kingartefakten ist es dabei erforderlich, Positionen solcher Blockingartefakte innerhalb des Bildes zu ermitteln, d.h. die Positionen von Kanten im Bildverlauf zu ermitteln, die Teil von Blockingartefakten sind, und in Kenntnis der Position der Kanten Filterkoeffizienten solcher Bildpunkte zu bestimmen, die durch die Kante angeregt werden. Die Position der Bildpunkte mit durch die Kante angeregten Filterkoeffizienten ist bezogen auf die Position der Kante stets gleich und abhängig von dem jeweiligen Analyseverfahren, das zur Ermittlung der Filterkoeffizienten angewendet wird.

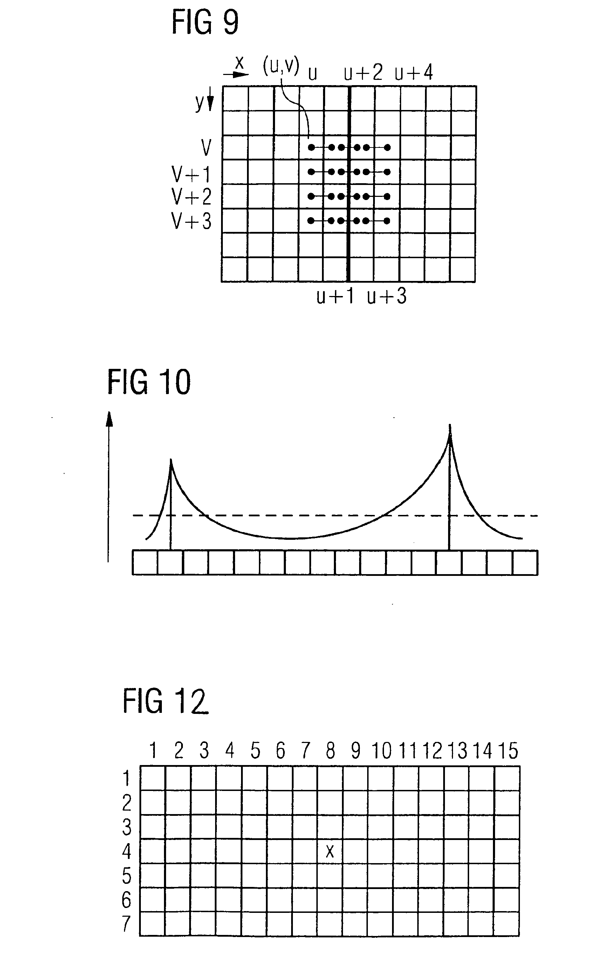

Ein mögliches Verfahren zur Detektion von Kanten, die Blockingartefakte sind, wird nachfolgend anhand von Figur 9 erläutert. Zur Detektion solcher Blockingartefakte werden dabei die ursprünglichen Bildinformationswerte verwendet, also die Bildinformationswerte, die auch der Analyse zur Erzeugung der Filterkoeffizienten zugrunde gelegt werden.

Figur 9 zeigt ausschnittsweise die Bildpunktmatrix mit Bildpunkten, denen jeweils Bildinformationswerte zugeordnet sind. Das Detektionsverfahren liefert eine Information, ob an einer vorgegebenen Position eine Kante im Bildverlauf vorliegt. Zur Erläuterung sei eine in Figur 9 fett dargestellte mögliche Kantenposition zwischen einer ersten Spalte u+1 und einer zweiten Spalte u+2 betrachtet. Zur Detektion einer in vertikaler Richtung zwischen der ersten und der zweiten Spalte u+1, u+2 verlaufenden Kante ist vorgesehen, einen ersten Bildpunktdifferenzwert zu ermitteln, der abhängig ist von der Bildpunktdifferenz wenigstens eines Bildpunktpaares, das zwei in horizontaler Richtung benachbart zueinander angeordnete Bildpunkte aufweist. Ein erster dieser Bildpunkte des Bildpunktpaares ist hierbei in der ersten Spalte u+1 oder links der ersten Spalte u+1, also links der Kante, und ein zweiter Bildpunkt des Bildpunktpaares ist in der zweiten Spalte u+2 oder rechts der zweiten Spalte u+2, also rechts der Kante, angeordnet. Unter "Bildpunktdifferenz eines Bildpunktpaares" ist nachfolgend ein Wert zu verstehen, der von der Differenz der Bildinformationswerte der Bildpunkte dieses Bildpunktpaares abhängig ist. Diese Bildpunktdifferenz ist beispielsweise der Betrag oder ein ganzzahliges Vielfaches der Differenz der Bildinformationswerte.

Außerdem ist vorgesehen, zwei weitere Bildpunktdifferenzwerte zu ermitteln, nämlich einen zweiten Bildpunktdifferenzwert, der abhängig ist von der Bildpunktdifferenz eines zweiten Bildpunktpaares, das in horizontaler Richtung links der Kante liegt, und einen dritten Bildpunktdifferenzwert, der abhängig ist von der Bildpunktdifferenz eines dritten Bildpunktpaares, das in horizontaler Richtung rechts neben dem ersten Bildpunktpaar liegt. Die drei Bildpunktpaare liegen beispielsweise in derselben Zeile des Bildes. Bezug nehmend auf Figur 9 wird in einer Zeile v beispielsweise ein erstes Bildpunktpaar durch die Bildpunkte (u+1, v) und (u+2, v) gebildet, die unmittelbar benachbart zueinander angeordnet sind, die also einen Bildpunktabstand von 1 aufweisen. Zur Ermittlung der ersten Bildpunktdifferenz können allerdings auch Bildpunkte links und rechts der Kantenposition verwendet werden, deren Bildpunktabstand größer als 1 ist. Das zweite Bildpunktpaar umfasst beispielsweise die unmittelbar benachbarten Bildpunkte (u, v) und (u+1, v) und das dritte Bildpunktpaar umfasst beispielsweise die unmittelbar benachbarten Bildpunkte (u+2, v) und (u+3, v). Die Bildpunkte des zweiten und dritten Bildpunktpaares müssen nicht unmittelbar benachbart zueinander angeordnet sein, sondern können auch einen Bildpunktabstand größer als 1 aufweisen. Ein erstes Kriterium für das Vorliegen einer Kante zwischen den untersuchten Spalten u+1 und u+2 ist beispielsweise dann erfüllt, wenn der zweite und dritte Bildpunktdifferenzwert wesentlich kleiner sind als der ersten Bildpunktdifferenzwert. Ein zweites Kriterium für das Vorliegen eines Blockingartefakts liegt vor, wenn der erste Bildpunktdifferenzwert kleiner ist als ein vorgegebener Schwellenwert. Es wird hierbei angenommen, dass erste Bildpunktdifferenzwerte, die größer sind als dieser Schwellenwert, nicht Ergebnis eines Blockingartefakts, sondern Ergebnis einer durch den Bildinhalt gegebenen Kante im Bildverlauf ist. Das Vorliegen eines Blockingartefakts wird für eine untersuchte Kantenposition dann angenommen, wenn beide zuvor erläuterten Kriterien erfüllt sind.

Um die Gefahr einer fehlerhaften oder falschen Detektion zu verringern, können mehrere, beispielsweise vier, benachbarte Zeilen untersucht werden. Zur Ermittlung des ersten Bildpunktdifferenzwertes werden beispielsweise erste Bildpunktdifferenzen aus diesen mehreren Zeilen aufaddiert, und zur Ermittlung des zweiten und dritten Bildpunktdifferenzwertes werden zweite und dritte Bildpunktdifferenzen aus diesen mehreren Zeilen aufaddiert werden. Für das in Figur 9 dargestellte Szenario, bei dem Bildpunktpaare von vier benachbarten Zeilen betrachtet werden und bei dem die ersten und zweiten Bildpunktpaare und die ersten und dritten Bildpunktpaare in jeder Zeile einen gemeinsamen Bildpunkt besitzen, gilt für den ersten Bildpunktdifferenzwert S1 beispielsweise:

$$S1 = \sum_{i=o}^{3} \left| P(u+1, v+i) - P(u+2, v+i) \right| \qquad (7a).$$

Für den zweiten Bildpunktdifferenzwert gilt für das dargestellte Beispiel:

$$S2 = \sum_{i=o}^{3} \left| P(u, v+i) - P(u+1, v+i) \right| \qquad (7b),$$

und für den dritten Bildpunktdifferenzwert gilt:

$$S3 = \sum_{i=o}^{3} \left| P(u+2, v+i) - P(u+3, v+i) \right| \qquad (7c).$$

Es sei darauf hingewiesen, dass anstelle der Beträge beispielsweise auch geradzahlige Potenzen der Differenzen der Bildinformationswerte aufaddiert werden können. Unter Berücksichtigung dieser drei Bildpunktdifferenzwert ist ein erstes Kriterium für das Vorliegen eines Blockingartefakts gegeben, wenn der erste Bildpunktdifferenzwert S1 wesentlich größer ist als der zweite Bildpunktdifferenzwert und der dritte Bildpunktdifferenzwert, wenn also gilt:

$$S1 \gg S2 \wedge S1 \gg S3 \qquad (8a).$$

"Wesentlich größer" bedeutet in diesem Zusammenhang, dass das erste Kriterium beispielsweise dann gegeben ist, wenn der zweite und dritte Bildpunktdifferenzwert S2, S3 jeweils kleiner sind als a·S1 mit 0<a<0,1 ... 0,5, bzw. wenn das Verhältnis zwischen dem ersten Bildpunktdifferenzwert und dem zweiten und dritten Bildpunktdifferenzwert größer ist als ein vorgegebener Wert, beispielsweise ein Wert zwischen 5 und 10. Anstatt den ersten Bildpunktdifferenzwert mit zwei Werten, nämlich dem zweiten und dem dritten Bildpunktdifferenzwert zu vergleichen, kann der Mittelwert des zweiten und des dritten Bildpunktdifferenzwertes gebildet und der erste Bildpunktdifferenzwert mit diesem Mittelwert verglichen werden.

Bei einem Ausführungsbeispiel ist vorgesehen, ein lokales Blockingmaß LBM zu ermitteln, für das gilt:

$$\text{LBM} = -\text{S3}+\text{S1}-\text{S2} \qquad (8b).$$

Ein erstes Kriterium für eine Blockingartefakt liegt in diesem Fall beispielsweise dann vor, wenn diese lokale Blockingmaß größer als Null ist, wenn der erste Bildpunktdifferenzwert also größer ist als die Summe aus dem zweiten und dritten Bildpunktdifferenzwert.

Ein zweites Kriterium für das Vorliegen eines Blockingartefakts ist gegeben, wenn der erste Bildpunktdifferenzwert kleiner ist als ein vorgegebener erster Schwellenwert, wenn also gilt:

$$S1 < th1 \qquad (8c).$$

th1 bezeichnet hierbei den ersten Schwellenwert, dessen Absolutwert abhängig ist von der Anzahl der Bildpunktdifferenzen, die aufaddiert werden und abhängig ist vom Wertebereich, innerhalb dessen die Bildinformationswerte der einzelnen Bildpunkte liegen können. Dieser Schwellenwert legt einen Grenzwert für eine maximal zulässige Intensität einer Kante fest, an der eine Artefaktreduktion stattfinden soll. Liegt der erste Bildpunktdifferenzwert oberhalb dieser Schwelle, so wird davon ausgegangen, dass die Kante aus dem Bildinhalt und nicht aus einer blockweisen Kodierung des Bildes resultiert, so dass keine Filterung zur Artefaktreduktion erfolgen soll.

Wenn unter Berücksichtigung der beiden zuvor erläuterten Kriterien ein Blockingartefakt an einer Grenze zwischen zwei Spalten der Bildpunktmatrix ermittelt wird, werden beispielsweise die horizontalen 2x2-Filterkoeffizienten und die horizontalen 4x4-Filterkoeffizienten, die durch die detektierte Kante angeregt werden, in erläuterter Weise in ihrer Amplitude reduziert. Die Position der Bildpunkte bezogen auf die Kante, deren Filterkoeffizienten durch die Kante angeregt werden, ist unter anderem abhängig von der Art und Weise der Erzeugung der Filterkoeffizienten. Für die anhand von Figur 2 erläuterten horizontalen 2x2-und 4x4-Filterkoeffizienten gilt Bezug nehmend auf Figur 5, dass die Filterkoeffizienten solcher Bildpunkte angeregt werden, die sich in einer Spalte befinden, die sich links unmittelbar an die Kante anschließt bzw. die sich in drei Spalten befinden, die sich nach links unmittelbar an die Kante anschließen.

Die Reduktion der Amplitude der einzelnen durch eine Kante angeregten Filterkoeffizienten ist bei einem Ausführungsbeispiel abhängig vom Maß der Änderung der Bildinformationswerte an der Kante, d. h. von einem Gradienten der Bildpunktinformationswerte an der Kante. Wenn beide zuvor erläuterten Kriterien für das Vorliegen eines Blockingartefakts gegeben sind, werden die angeregten Filterkoeffizienten beispielsweise abhängig von dem Betrag der ersten Bildpunktdifferenz oder abhängig von der Summe der Beträge der ersten Bildpunktdifferenzen reduziert. Die Reduktion der Filterkoeffizienten ist hierbei beispielsweise um so stärker, je größer diese Amplitude ist. Vorzugsweise werden die angeregten Filterkoeffizienten nicht auf Null reduziert. Bei einem Ausführungsbeispiel ist vorgesehen, die angeregten Filterkoeffizienten abhängig von der ersten Bildpunktdifferenz auf 75%, 50% oder 25% ihres ursprünglichen Wertes zu reduzieren.

Bei einem weiteren Ausführungsbeispiel ist vorgesehen, das lokale Blockingmaß LBM gemäß Gleichung 8b als Maß für die Reduktion der Filterkoeffizienten zu verwenden. Ist das lokale Blockingmaß kleiner als Null, so erfolgt keine Reduktion der Filterkoeffizienten, da in diesem Fall nicht vom Vorliegen eines Blockingartefakts ausgegangen wird. Für Werte des Blockingmaßes LBM größer als Null kann als Maß der Reduktion der Filterkoeffizienten ein fest vorgegebener Wert verwendet werden. Bei einer anderen Ausführungsform können verschiedene Reduktionsfaktoren vorgesehen sein. Jedem dieser Reduktionsfaktoren ist ein Schwellenwert zugeordnet. Ein bestimmter Reduktionsfaktor wird dabei angewendet, wenn das lokale Blockingmaß den diesem Reduktionsfaktor zugeordneten Schwellenwert übersteigt, den nächstgrößeren Schwellenwert, der einem weiteren Reduktionsfaktor zugeordnet ist, jedoch nicht übersteigt. Die Reduktionsfaktoren sind so gewählt, dass sie mit größer werdenden Schwellenwerten größer werden, d.h. großen Schwellenwerten sind große Reduktionsfaktoren zugeordnet, die eine starke Reduktion bewirken. Übersteigt das lokale Blockingmaß einen größten der Schwellenwerte, so beträgt der Reduktionsfaktor beispielsweise 100%, der jeweilige Filterkoeffizient wird also zu Null gesetzt. Entsprechend dem zuvor erläuterten Beispiel werden beispielsweise 4 Reduktionsfaktoren vorgesehen: 25% für kleine lokale Blockingmaßes und weiterhin 50%, 75% und 100% für größere lokale Blockingmaße.

Die Detektion in horizontaler Richtung verlaufender Kanten von Blockingartefakten erfolgt analog zu den Erläuterungen zu Figur 9, wobei für die Detektion horizontaler Kanten jeweils in einer Spalte angeordnete Bildpunktpaare anstatt in einer Zeile angeordnete Bildpunktpaare betrachtet werden. Bei Detektion einer horizontal verlaufenden Kante eines Blockingartefakts werden dann Bezug nehmend auf die Erläuterungen zu Figur 7 beispielsweise die vertikalen 2x2-Filterkoeffizienten und die vertikalen 4x4-Filterkoeffizienten modifiziert, die durch die Kante angeregt werden.

Alternativ oder zusätzlich zu dem anhand von Figur 9 erläuterten (lokalen) Verfahren zur Detektion von Blockingartefakten besteht die Möglichkeit, global ein Blockraster für das gesamte Bild zu ermitteln. Zur Detektion des Vorhandenseins einer vertikalen Blockgrenze an einer vorgegebenen Position wird beispielsweise für alle oder zumindest für einen Großteil der Zeilen ermittelt, ob die beiden zuvor genannten Kriterien für das Vorliegen einer Kante an der gegebenen Position erfüllt sind. Das Vorliegen einer Blockgrenze wird hierbei beispielsweise dann angenommen, wenn die Anzahl der Zeilen, für die das Blockingkriterium an einer gegebenen Position erfüllt ist, signifikant höher ist als für benachbarte Positionen, also (bei Detektion einer vertikalen Kante) für Positionen, die in Zeilenrichtung links oder rechts neben der gegebenen Position liegen. Mit anderen Worten: das Vorliegen einer vertikalen Blockgrenze an einer gegebenen Position wird dann angenommen, wenn die Anzahl der Zeilen, für die das Blockingkriterium an der gegebenen Position erfüllt ist, lokal signifikant ein Maximum erreicht. In Figur 10 ist für verschiedene Kantenpositionen beispielhaft die Anzahl der Zeilen aufgetragen, in welchen die beiden Kriterien für das Vorliegen einer Kante an der jeweiligen Position erfüllt sind. Die gestrichelte Linie repräsentiert hierbei einen Mittelwert. In dem dargestellten Beispiel erreicht die Anzahl der Zeilen, für welche das Kantenkriterium erfüllt ist, für zwei Positionen ein lokales Maximum, so dass das Vorliegen einer Blockgrenze für diese beiden Positionen angenommen wird. Die Detektion einer horizontalen Blockgrenze erfolgt in entsprechender Weise.

Die Detektion des lokalen Blockrasters beruht auf einer statistischen Auswertung, indem ermittelt wird wie oft ein Blockingmuster in einer Zeile/Spalte auftritt bzw. wie oft das Blockingkriterium erfüllt ist. Dies kann unter Umständen jedoch nicht ausreichend sein, um eine einzelne Spalte/Zeile als Blockingspalte einzustufen, insbesondere deshalb, weil neben Kanten, die aus dem Blockraster resultieren, Kanten vorhanden sein können, die aus dem normalen Bildinhalt resultieren und die "Störungen" bei der Detektion des Blockrasters führen können.

Um solche Probleme zu vermeiden, können Modelle für das Blockraster erzeugt werden. Jedes Modell repräsentiert bzw. definiert hierbei ein Blockraster im Hinblick auf horizontale und vertikale Abmessungen (Spacing) der Blöcke des Rasters und im Hinblick auf eine Verschiebung (offset) der einzelnen Raster in vertikaler und horizontaler Richtung gegenüber einer vorgegebenen Position, so dass vier Freiheitsgrade für ein Raster gegeben sind. Unter Berücksichtigung der zuvor durchgeführten statistischen Auswertung wird dann ermittelt, welches der Blockmodelle am besten zu der statistischen Auswertung passt. Dieses Modell wird dann für die Ermittlung der Blockingartefakte verwendet.

Die zuvor erläuterte statistische Auswertung kann auf das ganze Bild angewendet werden, kann jedoch auch auf ein Fenster mit beispielsweise 32 Spalten oder auf ein Fenster mit beispielsweise 32 Zeilen angewendet werden, das über das Bild wandert. Die Spalten bzw. Zeilen eines solchen Fensters erstrecken sich dabei über die gesamte Bildhöhe bzw. Bildbreite.

Bei einem Ausführungsbeispiel des Verfahrens ist dabei vorgesehen, dass eine Modifikation von Filterkoeffizienten, die im "Anregungsbereich" einer Kante liegen, nur dann erfolgt, wenn die Kante an einer Grenze des Blockrasters liegt und wenn die anhand der Gleichungen (8a) und (8b) erläuterten Kriterien für das Vorliegen eines Blockingartefakts erfüllt sind. Die Ermittlung einer in horizontaler Richtung verlaufenden Blockgrenze erfolgt analog, indem für jeweils zwei benachbarte Zeilen die Anzahl der Spalten ermittelt wird, für welche die drei Bildpunktpaare die Bedingungen gemäß der Gleichungen (8a) und (8b) erfüllen.

Bei einem Ausführungsbeispiel des Verfahrens ist vorgesehen, ein Maß, um welches die Filterkoeffizienten nach Detektion eines Blockingartefakts maximal reduziert werden dürfen, global für das gesamte Bild zu ermitteln.

Hierzu wird beispielsweise eine globale "Blocking-Intensität" für das gesamte Bild ermittelt, und ein maximaler Reduktionsfaktor, um den die angeregten Filterkoeffizienten reduziert werden, wird abhängig von dieser Blocking-Intensität eingestellt. Der Reduktionsfaktor ist dabei um so größer ist, je höher die Blocking-Intensität ist. Die Blocking-Intensität ist hierbei ein Maß für die Differenz der Bildinformationswerte solcher Bildpunkte, die entlang von Blockgrenzen in einer Richtung quer zu der Blockgrenze benachbart zueinander angeordnet sind.

Für die Ermittlung der Blocking-Intensität werden beispielsweise die Bildpunktdifferenzen von Bildpunktpaaren, die über das gesamte Bild verteilt sind, und die jeweils quer zu einer Blockgrenze benachbart zueinander angeordnet sind, ermittelt und aufsummiert. Zusätzlich werden die Bildpunktdifferenzen solcher Bildpunktpaare ermittelt, die in der gleichen Zeile oder gleichen Spalte wie die zuvor ermittelten Bildpunktpaare liegen, die jedoch beabstandet zu der Blockgrenze angeordnet sind ermittelt. Die Bildpunktdifferenzen dieser weiteren Bildpunktpaare werden ebenfalls aufsummiert, und die so erhaltene zweite Summe wird von der ersten Summe subtrahiert. Ergebnis ist die Blocking-Intensität für das gesamte Bild, die nachfolgend auch als Blockingmaß bezeichnet wird. Für die Ermittlung des Blockingmaßes können dabei alle Bildpunktpaare und zu diesen Bildpunktpaaren benachbarte Bildpunktpaare entlang aller Blockgrenzen ermittelt werden. Darüber hinaus besteht auch die Möglichkeit, eine fest vorgegebene Anzahl von Bildpunktpaaren zu ermitteln, die entlang der Blockgrenzen angeordnet sind, die jedoch beliebig über das Bild verteilt sind. Bezug nehmend auf Figur 9 wird - unter der Annahme, dass zwischen den Spalten u+1 und u+2 eine Kante verläuft - für die Ermittlung des Blockingmaßes beispielsweise ein erstes Bildpunktpaar mit den Bildpunkten (u+1,v) und (u+2,v), die quer zu der Blockgrenze benachbart zueinander angeordnet sind, sowie ein zweites Bildpunktpaar mit den Bildpunkten (u+3,v) und (u+4,v) betrachtet. Die Bildpunkte des zweiten Bildpunktpaares liegen dabei in der Richtung quer zu der Blockgrenze benachbart zu den Bildpunkten des ersten Bildpunktpaares, und damit beabstandet zu der Blockgrenze. Das zweite Bildpunktpaar kann sich dabei unmittelbar an das erste Bildpunktpaar anschließen, kann jedoch auch beabstandet zu dem ersten Bildpunktpaar angeordnet sein. Für einen aus diesen beiden Bildpunktpaaren resultierenden Anteil BI' des Blockingmaßes für das gesamte Bild gilt beispielsweise:

$$ BI' = \left| P(u+1, v) - P(u+2, v) \right| - \left| P(u+3, v) - P(u+4, v) \right| \tag{9}. $$

Ein solcher Blockingmaßanteil BI' wird hierbei in erläuterter Weise für eine Vielzahl von über das gesamte Bild verteilten Bildpunktpaaren ermittelt, und die so erhaltenen Blockingmaßanteile werden aufsummiert, um das Blockingmaß für das gesamte Bild zu erhalten, es gilt also:

$$ BI = \sum BI' \tag{10}. $$

Basierend auf dem so erhaltenen globalen Blockingmaß BI, wird ein maximaler Reduktionsfaktor für die durch die einzelnen Blockkanten angeregten Filterkoeffizienten ermittelt.

Die tatsächliche Reduktion der Filterkoeffizienten kann dabei abhängig von dem lokalen Blockingmaß (vgl. Gleichung 8b) innerhalb der durch das globale Blockingmaß vorgegebenen Grenzen erfolgen. Beträgt der anhand des globalen Blockingmaßes ermittelte maximale Reduktionsfaktor beispielsweise 75% und der anhand des lokalen Blokkingmaßes ermittelte lokale Reduktionsfaktor beispielsweise 50%, so entspricht der tatsächlichen Reduktionsfaktor beispielsweise dem Produkt aus dem globalen und dem lokalen Reduktionsfaktor, d.h. 75%·50%=37,5% in dem Beispiel.

Bei einem weiteren Ausführungsbeispiel ist vorgesehen, dass der anhand des globalen Blockingmaßes ermittelte Reduktionsfaktor als Obergrenze für den tatsächlichen Reduktionsfaktor verwendet wird. Als Reduktionsfaktor wird hierbei der lokale Reduktionsfaktor verwendet, wenn dieser kleiner oder gleich dem maximalen Reduktionsfaktor ist, und als Reduktionsfaktor wird der maximale Reduktionsfaktor verwendet wird, wenn der lokale Reduktionsfaktor größer als der maximale Reduktionsfaktor ist.

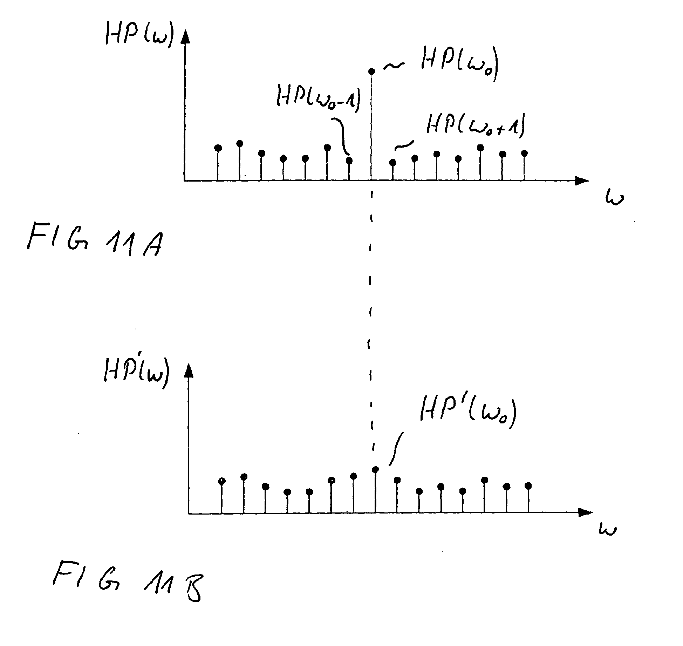

Bei den bisher erläuterten Beispielen zur Reduktion von Blockingartefakten ist vorgesehen, Blockgrenzen zu detektieren und Filterkoeffizienten, die durch eine detektierte Blockgrenze angeregt sind, dadurch zu modifizieren, dass deren Amplitudenwert reduziert wird. Bei einem weiteren Beispiel ist vorgesehen, zur Modifikation angeregter Filterkoeffizienten im Bereich einer Blockgrenze eine Tiefpassfilterung durchzuführen. Die Gefahr eines Einfügens zusätzlicher Artefakte durch Modifikation der Filterkoeffizienten ist hierbei im Vergleich zu einer bloßen Reduktion von Filterkoeffizienten reduziert. Die Modifikation von Filterkoeffizienten mittels einer Tiefpassfilterung wird nachfolgend anhand der Figuren 11A bis 11B veranschaulicht.

Figur 11A zeigt beispielhaft die Amplitudenwerte der Filterkoeffizienten HP eines Typs für in horizontaler Richtung oder in vertikaler Richtung benachbarte Bildpunkte eines Bildes. Diese Filterkoeffizienten sind beispielsweise Hochpassfilterkoeffizienten eines der bereits erläuterten Typen, wie z.B. $HP^V_{2x2-}$ (x, y) , $HP^H_{2x2}$ (x, y), $HP^H_{4x4}$ (x, y) oder $HP^V_{4x4}$ (x, y). In diesem Zusammenhang sei darauf hingewiesen, bei der eingangs erläuterten Analyse auch andere als die zuvor erläuterten Filterkoeffizienten ermittelt werden können.

HP(w$_0$) bezeichnet in Figur 11A einen Filterkoeffizienten, der durch eine Blockgrenze angeregt ist. w$_0$ bezeichnet in diesem Zusammenhang eine horizontale oder eine vertikale Koordinate, und zwar abhängig davon, ob es sich bei den dargestellten Filterkoeffizienten um Filterkoeffizienten handelt, die eine Hochpassfilterung in horizontaler Richtung oder in vertikaler Richtung repräsentiert. Für einen Filterkoeffizienten, der eine Hochpassfilterung in horizontaler Richtung repräsentiert, wie z.B.

HP$^H_{2x2}$(x, y) oder HP$^H_{4x4}$(x,y) steht w$_0$ für eine horizontale Koordinate bzw. x-Koordinate. Eine Modifikation des Filterkoeffizienten HP(w$_0$) eines Bildpunktes erfolgt hierbei unter Verwendung der Filterkoeffizienten horizontal benachbarter Bildpunkte. Für einen Filterkoeffizienten, der eine Hochpassfilterung in vertikaler Richtung repräsentiert, wie z.B. HP$^V_{2x2}$(x,y) oder HP$^V_{4x4}$(x,y) steht w$_0$ für eine vertikale Koordinate bzw. y-Koordinate. Eine Modifikation des Filterkoeffizienten HP(w$_0$) eines Bildpunktes erfolgt hierbei unter Verwendung der Filterkoeffizienten vertikal benachbarter Bildpunkte.

Zur Modifikation des angeregten Filterkoeffizienten ist vorgesehen, unter Berücksichtigung benachbarter Filterkoeffizienten einen Tiefpassfilterwert HP'(w$_0$) zu berechnen und den angeregten Filterkoeffizienten durch den Tiefpassfilterwert zu ersetzen, wie dies im Ergebnis in Figur 11B dargestellt ist. Als Tiefpassfilter für die Ermittlung des Tiefpassfilterwertes eignet sich ein beliebiges Tiefpassfilter. Bei einem Beispiel ist vorgesehen, den Tiefpassfilterwert HP'(w$_0$) wie folgt zu berechnen:

$$HP'(w_0) = \frac{HP(w_0 - 1) + 2 \cdot HP(w_0) + HP(w_0 + 1)}{4} \qquad (11)$$

Das Tiefpassfilter dieses Beispiels besitzt eine Filterlänge von 3 und Filterkoeffizienten 1/4, 1/2, 1/4. Selbstverständlich sind für die Tiefpassfilterung auch Filter mit einer größeren Filterlänge einsetzbar.

In dem dargestellten Beispiel ist außerdem vorgesehen, nicht nur den angeregten Filterkoeffizienten durch eine Tiefpassfilterung zu modifizieren, sondern auch benachbarte Filterkoeffizienten, wie z.B. die Filterkoeffizienten HP(w$_0$-1), HP(w$_0$+1).

Ringingartefakte können an scharfen Kanten im Bildverlauf auftreten. Zur Reduktion solcher Ringingartefakte ist es dabei grundsätzlich vorgesehen, solche scharfen Kanten im Bildverlauf zu ermitteln und die Filterkoeffizienten solcher Bildpunkte, die entlang der Kanten angeordnet sind, zu reduzieren. Im Bereich sogenannter Texturen, also im Bereich solcher Bildbereiche, in denen mehrere scharfe Kanten aufeinander folgen, in dem solche regelmäßigen Kanten also gehäuft auftreten, soll dabei keine Reduktion der Filterkoeffizienten erfolgen, da Ringingartefakte im Bereich solcher Texturen kaum auffallen und da eine Reduktion der Filterkoeffizienten zu einer sichtbaren Kontrastreduktion im Bereich der Kantenverläufe führen würde.

Für eine Entscheidung, ob die Filterkoeffizienten eines Bildpunktes zur Reduktion von Ringing-Artefakten reduziert werden sollen, ist bei einem Ausführungsbeispiel vorgesehen, einen den Bildpunkt enthaltenen Bildbereich im Hinblick auf das Vorliegen scharfer Kanten und möglicher Texturen näher zu untersuchen. Bezug nehmend auf Figur 12 umfasst dieser untersuchte Bildbereich beispielsweise sieben Zeilen und fünfzehn Spalten. Der Bildpunkt, dessen Filterkoeffizienten gegebenenfalls reduziert werden, ist dabei zentral innerhalb des untersuchten Bildbereiches angeordnet, d. h. der untersuchte Bildbereich liegt symmetrisch um diesen Bildpunkt. Zur Veranschaulichung ist dieser Bildpunkt in Figur 12 mit "X" bezeichnet.

In einem ersten Untersuchungsschritt werden für alle Spaltenpaare mit zwei benachbarten Spalten die Bildpunktdifferenzen für Bildpunktpaare mit je einem Bildpunkt in einer Spalte und einem anderen Bildpunkt in der anderen Spalte ermittelt und die Beträge oder geradzahlige Potenzen der so erhaltenen Bildpunktdifferenzen werden aufaddiert. Die so für alle Spaltenpaare erhaltenen Bildpunktdifferenzwerte, die ein Maß für einen Gradienten der Bildinformationswerte an der jeweiligen Grenze zwischen zwei Spalten darstellen, werden mit einem vorgegebenen ersten Schwellenwert verglichen. Übersteigt der ermittelte Differenzwert einen vorgegebenen Schwellenwert, so wird angenommen, dass an der jeweiligen Spaltengrenze eine Kante im Bildverlauf vorliegt. Übersteigt der ermittelte Differenzwert allerdings für mehr als eine vorgegebene Anzahl von Spaltenpaaren diesen Grenzwert, so wird angenommen, dass der betrachtete Bildbereich ein texturierter Bildbereich ist. Es erfolgt dann keine Modifikation der Filterkoeffizienten zur Reduktion von Ringing-Artefakten.

In entsprechender Weise werden für alle benachbarten Zeilenpaare des untersuchten Bildbereiches Bildpunktdifferenzwerte ermittelt, indem die Bildpunktdifferenzen von Bildpunktpaaren, die jeweils einen Bildpunkt in einer Zeile und einen Bildpunkt in der benachbarten Zeile aufweisen, ermittelt und indem die Beträge oder geradzahligen Potenzen dieser Bildpunktdifferenzen aufaddiert werden. Diese für die Zeilenpaare erhaltenen Bildpunktdifferenzwerte werden mit einem zweiten Schwellenwert verglichen. Übersteigt der für ein Zeilenpaar ermittelte Bildpunktdifferenzwert den zweiten Schwellenwert, so wird angenommen, dass an der jeweiligen Zeilengrenze eine Kante im Bildverlauf vorliegt. Übersteigt die Anzahl der Zeilenpaare, für die die Bildpunktdifferenzwerte oberhalb des zweiten Schwellenwertes liegen, allerdings eine vorgegebene Anzahl, so erfolgt keine Modifikation der Filterkoeffizienten zur Reduktion von Ringing-Artefakten, weil in diesem Fall vom Vorliegen einer Textur in dem betrachteten Bildbereich ausgegangen wird.

Ein Modifikation der Filterkoeffizienten des zentral im untersuchten Bildbereich liegenden Bildpunktes erfolgt zusammenfassend dann, wenn zwei Kriterien erfüllt sind, die gemeinsam auf ein Vorliegen möglicher Ringing-Artefakte hinweisen. Ein erstes Kriterium ist dann erfüllt, wenn der Bildpunktdifferenzwert wenigstens eines Spaltenpaares des untersuchten Bildbereiches größer ist als der vorgegebene erste Schwellenwert oder wenn der Bildpunktdifferenzwert wenigstens eines Zeilenpaares des untersuchten Bildbereiches größer ist als der vorgegebene zweite Schwellenwert. Ein zweites Kriterium liegt dann vor, wenn die Anzahl der Spaltenpaare, für welche die Bildpunktdifferenzwerte größer sind als der erste Schwellenwert, kleiner ist als eine vorgegebene erste Anzahl und wenn die Anzahl der Zeilenpaare, für welche die Bildpunktdifferenzen größer sind als der vorgegebene zweite Schwellenwert, geringer ist als eine vorgegebene zweite Anzahl. Das erste Kriterium ist erfüllt, wenn wenigstens eine Kante in horizontaler oder vertikaler Richtung vorliegt. Das zweite Kriterium ist dann erfüllt, wenn die Kante nicht Bestandteil einer Textur, also einer Struktur mit mehreren Kanten ist. Die Schwellenwerte, mit denen die Bildpunktdifferenzwerte verglichen werden, um ein Vorliegen des ersten und zweiten Kriteriums zu untersuchen, können sich unterscheiden. So können die Bildpunktdifferenzwerte für die Untersuchung eines Vorliegens des ersten Kriteriums beispielsweise mit einem ersten Schwellenwert (Kantenschwellenwert) und für die Untersuchung eines Vorliegens des zweiten Kriteriums beispielsweise mit einem zweiten Schwellenwert (Texturschwellenwert) verglichen werden.

Eine Textur wird beispielsweise erkannt, wenn mehr als etwa 33%-50% der Differenzen den Texturschwellwert übersteigen. Das zweite Kriterium ist also dann erfüllt, wenn mehr als 33%-50% unterhalb des Texturschwellenwertes liegen.

Zur Untersuchung des zuvor erläuterten ersten Kriteriums ist bei einem Ausführungsbeispiel vorgesehen, die für die einzelnen Spaltenpaare und die für die einzelnen Zeilenpaare erhaltenen Bildpunktdifferenzwerte zu normieren, indem diese Bildpunktdifferenzwerte durch die Anzahl der in einer Spalte enthaltenen Bildpunktwerte bzw. durch die Anzahl der in einer Zeile enthaltenen Bildpunktwerte dividiert werden. Die so erhaltenen normierten Bildpunktdifferenzwerte für einzelne Spaltenpaare und einzelne Zeilenpaare können dann mit einem gemeinsamen Schwellenwert verglichen werden, wobei das Vorliegen einer Kante zwischen zwei Spalten des untersuchten Bildbereiches oder das Vorliegen einer Kante zwischen zwei Zeilen des untersuchten Bildbereiches dann angenommen wird, wenn der normierte Bildpunktdifferenzwert für die zwei Spalten oder wenn der normierte Bildpunktdifferenzwert für die zwei Zeilen den vorgegebenen Schwellenwert übersteigt. Bei einem Ausführungsbeispiel ist vorgesehen, nur horizontale Filterkoeffizienten zu modifizieren, wenn die beiden zuvor erläuterten Kriterien lediglich für Spalten des untersuchten Bildbereiches erfüllt sind, und nur die vertikalen Filterkoeffizienten zu modifizieren, wenn die beiden zuvor erläuterten Kriterien lediglich für Zeilen des untersuchten Bildbereiches erfüllt sind. Bei einer weiteren Ausführungsform ist vorgesehen, sowohl die horizontalen als auch die vertikalen Filterkoeffizienten zu modifizieren, wenn die zwei zuvor erläuterten Kriterien für Spalten und/oder Zeilen des untersuchten Bildbereiches erfüllt sind. Modifiziert werden dann beispielsweise alle zuvor erläuterten 2x2- und alle zuvor erläuterten 4x4-Filterkoeffizienten, d. h. die horizontalen, die vertikalen und die diagonalen 2x2- und 4x4-Filterkoeffizienten.

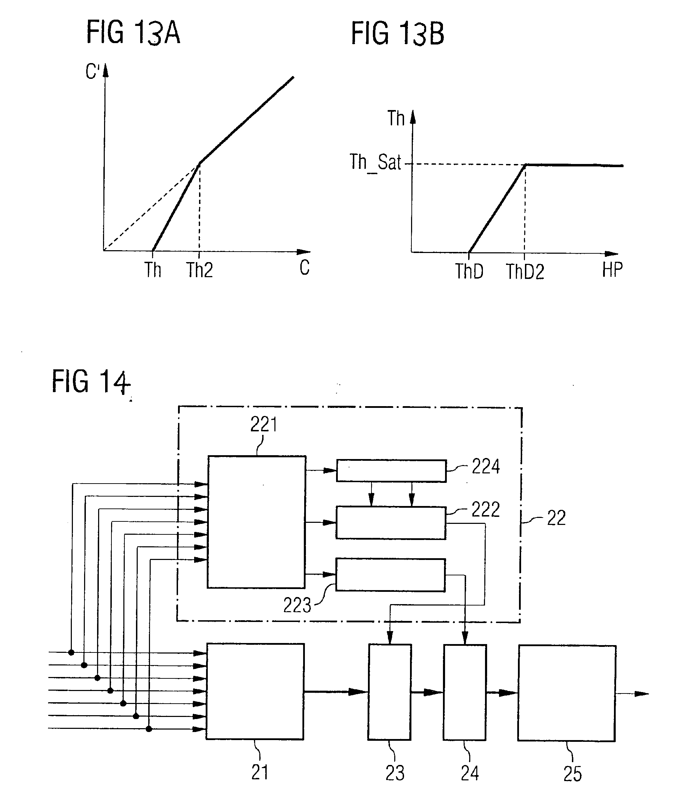

Liegt unter Berücksichtigung der zuvor erläuterten Kriterien keine Textur vor, so werden die Filterkoeffizienten modifiziert. Zur Erläuterung der Modifikation der Filterkoeffizienten zeigt Figur 13A eine Kennlinie zur Modifikation der Filterkoeffizienten. C steht hierbei für einen der anhand der Analyse ermittelten und zu modifizierenden Filterkoeffizienten. C' steht für den modifizierten Filterkoeffizienten. Filterkoeffizienten, die kleiner sind als ein erster Schwellenwert Th1 werden dabei zu Null gesetzt. Filterkoeffizienten, die größer sind als ein zweiter Schwellenwert Th2 werden nicht verändert. Filterkoeffizienten, die innerhalb dieser beiden Schwellenwerte Th, Th2 liegen, werden gedämpft. Der zweite Schwellenwert Th2 ist beispielsweise doppelt so groß wie der erste Schwellenwert Th, es gilt also: $Th2 = 2 \cdot Th$.

Bei einem Ausführungsbeispiel ist vorgesehen, die Schwellenwerte abhängig von den Eigenschaften des untersuchten Bildbereiches einzustellen, wie nachfolgend für den ersten Schwellenwert Th anhand von Figur 13B dargestellt ist. Dieser Schwellenwert Th ist dabei abhängig von einem maximalen Gradienten HP, der in horizontaler oder vertikaler Richtung des untersuchten Bildbereiches ermittelt wird. Dieser maximale Gradient HP entspricht beispielsweise dem Maximum der für den untersuchten Bildbereich ermittelten normierten Bildpunktdifferenzwerte sowohl in Spaltenrichtung als auch in Zeilenrichtung. Für einen kleinen maximalen Gradienten HP, also für Werte kleiner als ein erster Gradientenschwellenwert ThD ist der erste Schwellenwert Th der Coring-Kennlinie gemäß Figur 13A Null. Dies ist gleichbedeutend damit, dass für kleine maximale Gradienten die Filterkoeffizienten nicht modifiziert werden. Für maximale Gradienten größer als der erste Gradientenwert ThD nimmt der erste Schwellenwert Th Werte größer als Null an. Der Schwellenwert Th ist dabei nach oben hin auf einen Grenzwert Th_Sat begrenzt. Diesen Grenzwert nimmt der erste Schwellenwert Th für maximale Gradienten größer als einem zweiten Gradientenschwellenwert ThD2 an. Für diesen zweiten Gradientenschwellenwert ThD2 gilt beispielsweise: $ThD2 = 2 \cdot ThD$.

Die Schwellenwerte der Coring-Kennlinie sind somit adaptiv gewählt und abhängig vom Wert eines der für den untersuchten Bildpunkt ermittelten Filterkoeffizienten.

Die zuvor erläuterten Verfahren lassen sich aufeinanderfolgend durchführen, indem die Filterkoeffizienten beispielsweise zunächst zur Reduktion von Blocking-Artfekten modifiziert werden und indem die Filterkoeffizienten anschließend zur Reduktion von Ringing-Artefakten den unter Verwendung der anhand von Figur 13 erläuterten Kennlinien modifiziert werden. Es kann dabei Filterkoeffizienten geben, die zweimal, also sowohl zur Reduktion von Blocking-Artefakten als auch zur Reduktion von Ringing-Artefakten modifiziert werden, die nur einmal, also entweder zur Reduktion von Blocking-Artefakten oder zur Reduktion von Ringing-Artefakten modifiziert werden, oder die gar nicht modifiziert werden.

Figur 14 veranschaulicht anhand eines Blockdiagramms den grundsätzlichen Verfahrensablauf eines solchen Verfahrens. In einer Analysestufe 21 erfolgt hierbei eine Analyse des Bildes zur Bereitstellung der einzelnen Bildpunkten des Bildes zugeordneten Filterkoeffizienten. Parallel dazu erfolgt in einer Detektionsstufe 22, die verschiedene Unterstufen besitzen kann, eine Detektion von Blocking-Artefakten und die Detektion solcher Bildbereiche, in denen potentiell Ringing-Artefakte vorhanden sein können. Eine Auswahlstufe 221 wählt hierbei Bildbereiche, beispielsweise Bildbereiche mit 7 Zeilen und 20 Spalten aus, auf die die einzelnen Detektionsalgorithmen angewendet werden. Eine Blocking-Stufe 222 detektiert hierbei die Bereiche, in denen Blocking-Artefakte vorhanden sind. Optional werden hierzu Informationen von einer Blockrasterstufe 224 verwendet, die Informationen über ein in dem Bild vorhandenes Blockraster bereitstellt. Eine Ringing-Stufe 223 ermittelt die Bereiche, in denen potentiell Ringing-Artefakte auftreten können.

Detektionsergebnisse der Blocking-Stufe 222 sind einer ersten Modifikationseinheit 23 zugeführt, die Filterkoeffizienten solcher Bildbereiche, in denen Blocking-Artefakte detektiert wurden, modifiziert und die Filterkoeffizienten solcher Bildbereiche, in denen keine Artefakte detektiert wurden unverändert lässt. Die am Ausgang der ersten Modifikationseinheit zur Verfügung stehenden Filterkoeffizienten, die bereits modifiziert sein können, sind einer zweiten Modifikationseinheit 24 zugeführt, die die Filterkoeffizienten unter Verwendung von Detektionsergebnissen der Ringing-Stufe 223 weiter modifiziert.

Die am Ausgang der zweiten Modifikationsstufe 24 zur Verfügung stehenden, gegebenenfalls modifizierten Filterkoeffizienten sind einer Synthesestufe 25 zugeführt, die aus diesen Filterkoeffizienten die Bildinformationswerte rekonstruiert. Es sei darauf hingewiesen, dass bei einem vereinfachten Verfahren auf eine der beiden Detektionsstufen, und damit auf eine der beiden Modfikationsstufen verzichtet werden kann.

**Patentansprüche**

1. Verfahren zur Reduktion von Bildartefakten in einem eine Anzahl von Bildpunkten aufweisenden Bild, denen jeweils wenigstens ein Bildinformationswert zugeordnet ist und die in Zeilen und Spalten des Bildes angeordnet sind, wobei das Verfahren aufweist:

   Durchführen einer Frequenzanalyse und Bereitstellen von mehreren Filterkoeffizienten zu wenigstens einigen der Bildpunkte des Bildes, anhand derer die Bildinformationswerte der Bildpunkte rekonstruierbar sind,
   Durchführen einer Artefaktdetektion zur Detektion von Artefaktbereichen innerhalb des Bildes,
   Modifizieren wenigstens einiger Filterkoeffizienten solcher Bildpunkte, die innerhalb der Artefaktbereiche liegen, zur Erzeugung modifizierter Filterkoeffizienten,
   Synthetisieren der Bildinformationswerte unter Verwendung der Filterkoeffizienten, wobei für Bildpunkte, die innerhalb der Artefaktbereiche liegen die modifizierten Filterkoeffizienten zur Synthese verwendet werden.

2. Verfahren nach Anspruch 1, das zur Detektion von Artefaktbereichen mit Blocking-Artefakten aufweist:

   Ermitteln eines ersten Bildpunktdifferenzwertes, der abhängig ist von der Differenz der Bildinformationswerte wenigstens eines ersten Bildpunktpaares, das zwei Bildpunkte aufweist, die über eine Spaltengrenze oder eine Zeilengrenze des Bildes hinweg benachbart sind,
   Ermitteln wenigstens eines zweiten Bildpunktdifferenzwertes, der abhängig ist von der Differenz der Bildinformationswerte wenigstens eines zweiten Bildpunktpaares, das zwei Bildpunkte aufweist, die in einer ersten Richtung senkrecht zu der Spaltengrenze oder der Zeilengrenze beabstandet zu den Bildpunkten des ersten Bildpunktpaares angeordnet sind,
   Vergleichen des ersten Bildpunktdifferenzwertes mit dem zweiten Bildpunktdifferenzwert, wobei das Vorhandensein eines Blocking-Artefakts entlang der Spaltengrenze oder der Zeilengrenze, angenommen wird, wenn das Verhältnis zwischen dem ersten und dem zweiten Bildpunktdifferenzwert größer ist als ein vorgegebener erster Schwellenwert oder wenn eine Differenz zwischen dem ersten und dem zweiten Bildpunktdifferenzwert größer ist als ein vorgegebener zweiter Schwellenwert.

**3.** Verfahren nach Anspruch 2, das weiterhin aufweist:

Ermitteln wenigstens eines dritten Bildpunktdifferenzwertes, der abhängig ist von der Differenz der Bildinformationswerte wenigstens eines dritten Bildpunktpaares, das zwei Bildpunkte aufweist, die in einer entgegengesetzt zu der ersten Richtung verlaufenden zweiten Richtung senkrecht zu der Spaltengrenze oder der Zeilengrenze beabstandet zu den Bildpunkten des ersten Bildpunktpaares angeordnet sind,
Vergleichen des ersten Bildpunktdifferenzwertes mit dem zweiten und dritten Bildpunktdifferenzwert, wobei das Vorhandensein eines Blocking-Artefakts entlang der Spaltengrenze oder der Zeilengrenze, angenommen wird, wenn das Verhältnis zwischen dem ersten und dem zweiten Bildpunktdifferenzwert und das Verhältnis zwischen dem ersten und dem dritten Bildpunktdifferenzwert größer ist als der vorgegebene erste Schwellenwert oder wenn die Differenz zwischen dem ersten und dem zweiten Bildpunktdifferenzwert und die Differenz zwischen dem ersten und dem dritten Bildpunktdifferenzwert größer ist als der vorgegebene zweite Schwellenwert.

**4.** Verfahren nach Anspruch 2 oder 3, bei dem der Bildpunktdifferenzwert abhängig ist vom Betrag oder einer ganzzahligen Potenz der Differenz der Bildinformationswerte des jeweiligen Bildpunktpaares.

**5.** Verfahren nach einem der Ansprüche 2 bis 4, bei dem der erste Bildpunktdifferenzwerte jeweils abhängig ist von der Differenz der Bildinformationswerte mehrerer erster Bildpunktpaare, die entlang derselben Spaltengrenze oder Zeilengrenze angeordnet sind.

**6.** Verfahren nach einem der Ansprüche 2 bis 5, bei dem das Bild mehrere aneinandergrenzende Bildblöcke aufweist und bei dem das Vorliegen eines Blocking-Artefakts entlang einer Spaltengrenze oder Zeilengrenze nur dann angenommen wird, wenn die Spaltengrenze oder Zeilengrenze entlang einer Blockgrenze verläuft.

**7.** Verfahren nach Anspruch 6, bei dem die Ermittlung eines Verlaufs von Blockgrenzen aufweist:

Ermittlung von Spalten- und Zeilendifferenzwerten zu benachbarten Spalten und Zeilen, die abhängig sind, von Differenzen der Bildinformationswerte der Bildpunkte wenigstens einiger Bildpunktpaare, die in den benachbarten Spalten oder Zeilen benachbart zueinander angeordnet sind.

**8.** Verfahren nach einem der Ansprüche 2 bis 8,
bei dem für einen Bildbereich ein lokales Blockingmaß und für einen den Bildbereich umfassenden größeren Bildbereich oder das gesamte Bild ein globales Blockingmaß ermittelt wird,
bei dem anhand des globalen Blockingmaßes ein maximaler Reduktionsfaktor ermittelt wird und anhand des lokalen Blockingmaßes ein lokaler Reduktionsfaktor ermittelt wird und
bei dem eine Reduktion von Filterkoeffizienten zu Bildpunkten, die in dem Bildbereich enthalten sind, abhängig ist von dem globalen und dem lokalen Reduktionsfaktor.

**9.** Verfahren nach einem der vorangehenden Ansprüche, das zur Detektion von Artefaktbereichen mit Ringing-Artefakten aufweist:

Auswählen eines Bildbereiches mit einer ersten Anzahl Zeilen und einer ersten Anzahl Spalten,
Ermitteln von Spaltendifferenzwerten und/oder Zeilendifferenzwerten zu benachbarten Spalten und/oder Zeilen des Bildbereiches,
Vergleichen der einzelnen Spaltendifferenzwerte und/oder Zeilendifferenzwerte mit einem vorgegebenen dritten und vierten Schwellenwert, wobei das Vorliegen eines Ringing-Artefakts dann angenommen wird, wenn wenigstens einer der Spaltendifferenzwerte oder Bildpunktdifferenzwerte den dritten Schwellenwert übersteigt und wenn die Anzahl der Spaltendifferenzwerte und/oder der Zeilendifferenzwerte, die den vierten Schwellenwert übersteigen, nicht größer ist als ein vorgegebener Grenzwert.

**10.** Verfahren nach Anspruch 9, bei dem der dritte und vierte Schwellenwert gleich sind.

**11.** Verfahren nach Anspruch 9 oder 10, bei dem der Bildbereich einen zentral in dem Bildbereich angeordneten Bildpunkt aufweist und bei dem die Filterkoeffizienten diese Bildpunktes bei Detektion eines Ringing-Artefakts modifiziert werden.

**12.** Verfahren nach einem der Ansprüche 9 bis 11, bei dem die Modifikation der Filterkoeffizienten abhängig ist von einem Maximum der ermittelten Spaltendifferenzwerte oder Zeilendifferenzwerte.

**13.** Verfahren nach einem der Ansprüche 9 bis 12, bei dem die Modifikation der Filterkoeffizienten aufweist:

zu Null setzen solcher Filterkoeffizienten, die kleiner sind als ein vorgegebener erster Grenzwert,
Dämpfen solcher Filterkoeffizienten, die größer sind als der erste Grenzwert und die kleiner sind als ein zweiter Grenzwert,
nicht Verändern solcher Filterkoeffizienten, die größer sind als der zweite Grenzwert.

**14.** Verfahren nach Anspruch 13, bei dem der zweite Grenzwert doppelt so groß ist wie der erste Grenzwert.

**15.** Verfahren nach Anspruch 13 oder 14, bei dem der erste und zweite Grenzwert von dem von einem Maximum der ermittelten Spaltendifferenzwerte oder Zeilendifferenzwerte abhängig ist.

**16.** Verfahren nach Anspruch 15, bei dem der erste und zweite Grenzwert mit zunehmendem Maximum der ermittelten Spaltendifferenzwerte oder Zeilendifferenzwerte zunimmt.

**17.** Verfahren nach einem der vorangehenden Ansprüche, bei dem eine Modifikation eines Filterkoeffizienten eines Typs eines Bildpunkts eine Tiefpassfilterung unter Verwendung von Filterkoeffizienten desselben Typs benachbarter Bildpunkte umfasst.

# FIG 1

100

X

Y

(x,y)

| a1 | b1 | c1 | d1 | e1 | f1 | g1 | h1 |
| a2 | b2 | c2 | d2 | e2 | f2 | g2 | h2 |
| a3 | b3 | c3 | d3 | e3 | f3 | g3 | h3 |
| a4 | b4 | c4 | d4 | e4 | f4 | g4 | h4 |

FIG 2A

| + | − |
|---|---|
| + | − |

| | | | | |
|---|---|---|---|---|
| | a1−b1 +a2−b2 | b1−c1 +b2−c2 | ... | |
| | a2−b2 +a3−b3 | b2−c2 +b3−c3 | ... | |
| | ... | ... | ... | |
| | | | | |

$HP_{2x2}^{H}$

FIG 2B

| + | + |
|---|---|
| − | − |

| | | | | |
|---|---|---|---|---|
| | a1+b1 a2−b2 | b1+c1 b2−c2 | ... | |
| | a2+b2 a3−b3 | b2+c2 b3−c3 | ... | |
| | ... | ... | ... | |
| | | | | |

$HP_{2x2}^{V}$

FIG 2C

| + | − |
|---|---|
| − | + |

| | | | | |
|---|---|---|---|---|
| | a1−b1 a2+b2 | b1−c1 b2+c2 | ... | |
| | a2−b2 a3+b3 | b2−c2 b3+c3 | ... | |
| | ... | ... | ... | |
| | | | | |

$HP_{2x2}^{D}$

FIG 2D

| + | + | − | − |
|---|---|---|---|
| + | + | − | − |
| + | + | − | − |
| + | + | − | − |

a1+b1-c1-d1
+a2+b2-c2-d2
+a3+b3-c3-d3
+a4+b4-c4-d4

...

...

...

$HP_{4x4}^{H}$

FIG 2E

| + | + | + | + |
|---|---|---|---|
| + | + | + | + |
| − | − | − | − |
| − | − | − | − |

a1+b1+c1+d1
+a2+b2+c2+d2
a3-b3-c3-d3
a4-b4-c4-d4

...

...

...

$HP_{4x4}^{V}$

FIG 2F

| + | + | − | − |
|---|---|---|---|
| + | + | − | − |
| − | − | + | + |
| − | − | + | + |

a1+b1-c1-d1
+a2+b2-c2-d2
a3-b3+c3+d3
a4-b4+c4+d4

...

...

...

$HP_{4x4}^{D}$

## FIG 2G

| + | + | + | + | − | − | − | − |
|---|---|---|---|---|---|---|---|
| + | + | + | + | − | − | − | − |
| + | + | + | + | − | − | − | − |
| + | + | + | + | − | − | − | − |

$$
\begin{aligned}
&a1+b1+c1+d1\text{-}e1\text{-}f1\text{-}g1\text{-}h1 \\
&+a2+b2+c2+d2\text{-}e2\text{-}f2\text{-}g2\text{-}h2 \\
&+a3+b3+c3+d3\text{-}e3\text{-}f3\text{-}g3\text{-}h3 \\
&+a4+b4+c4+d4\text{-}f4\text{-}e4\text{-}g4\text{-}h4
\end{aligned}
\qquad HP_{4x8}^{H}
$$

## FIG 2H

| + | + | + | + | + | + | + | + |
|---|---|---|---|---|---|---|---|
| + | + | + | + | + | + | + | + |
| + | + | + | + | + | + | + | + |
| + | + | + | + | + | + | + | + |

$$
\begin{aligned}
&a1+b1+c1+d1+e1+f1+g1+h1 \\
&+a2+b2+c2+d2+e2+f2+g2+h2 \\
&+a3+b3+c3+d3+e3+f3+g3+h3 \\
&+a4+b4+c4+d4+f4+e4+g4+h4
\end{aligned}
\qquad LP_{4x8}
$$

EP 2 023 638 A2

FIG 3

## FIG 4A

$$LP_{4\times4}(x,y) = \left[ HP^{H}_{4\times8}(x,y) - HP^{H}_{4\times8}(x-4,y) + LP_{4\times8}(x,y) + LP_{4\times8}(x-4,y) \right]/4$$

## FIG 4B

$$-HP^{H}_{2\times4}(x,y) = \left[ -HP^{D}_{4\times4}(x,y) + HP^{D}_{4\times4}(x,y-2) - HP^{V}_{4\times4}(x,y-2) - HP^{V}_{4\times4}(x,y) \right]/4$$

## FIG 4C

$$LP_{2\times4}(x,y) = \left[ HP^{V}_{4\times4}(x,y) - HP^{V}_{4\times4}(x,y-2) + LP_{4\times4}(x,y) + LP_{4\times4}(x,y-2) \right]/4$$

# FIG 4D

$$LP_{2x2}(x,y) = \left[ -HP^{H}_{2x4}(x-2,y) + HP^{H}_{2x4}(x,y) + LP_{2x4}(x-2,y) + LP_{2x4}(x,y) \right]/4$$

# FIG 4E

$$LP_{1x2}(x,y) = \left[ -HP^{V}_{2x2}(x,y-1) + HP^{V}_{2x2}(x,y) + LP_{2x2}(x,y-1) + LP_{2x2}(x,y) \right]/4$$

# FIG 4F

$$-HP^{H}_{1x2}(x,y) = \left[ HP^{D}_{2x2}(x,y-1) - HP^{D}_{2x2}(x,y) - HP^{H}_{2x2}(x,y-1) - HP^{H}_{2x2}(x,y) \right]/4$$

# FIG 4G

$$P(x,y) = \left[ -HP^{H}_{1x2}(x-1,y) + HP^{H}_{1x2}(x,y) + LP_{1x2}(x-1,y) + LP_{1x2}(x,y) \right]/4$$

EP 2 023 638 A2

**FIG 5A**

|   |   |   |   |   |   |   | x1 | x2 |   |   |   |   |   |   |   |   |   |
|---|---|---|---|---|---|---|---|---|---|---|---|---|---|---|---|---|---|
| 0 | 0 | 0 | 0 | 0 | 0 | 0 | 0 | 128 | 128 | 128 | 128 | 128 | 128 | 128 | 128 | 128 | 128 |
| 0 | 0 | 0 | 0 | 0 | 0 | 0 | 0 | 128 | 128 | 128 | 128 | 128 | 128 | 128 | 128 | 128 | 128 |
| 0 | 0 | 0 | 0 | 0 | 0 | 0 | 0 | 128 | 128 | 128 | 128 | 128 | 128 | 128 | 128 | 128 | 128 |
| 0 | 0 | 0 | 0 | 0 | 0 | 0 | 0 | 128 | 128 | 128 | 128 | 128 | 128 | 128 | 128 | 128 | 128 |
| 0 | 0 | 0 | 0 | 0 | 0 | 0 | 0 | 128 | 128 | 128 | 128 | 128 | 128 | 128 | 128 | 128 | 128 |
| 0 | 0 | 0 | 0 | 0 | 0 | 0 | 0 | 128 | 128 | 128 | 128 | 128 | 128 | 128 | 128 | 128 | 128 |
| 0 | 0 | 0 | 0 | 0 | 0 | 0 | 0 | 128 | 128 | 128 | 128 | 128 | 128 | 128 | 128 | 128 | 128 |
| 0 | 0 | 0 | 0 | 0 | 0 | 0 | 0 | 128 | 128 | 128 | 128 | 128 | 128 | 128 | 128 | 128 | 128 |
| 0 | 0 | 0 | 0 | 0 | 0 | 0 | 0 | 128 | 128 | 128 | 128 | 128 | 128 | 128 | 128 | 128 | 128 |
| 0 | 0 | 0 | 0 | 0 | 0 | 0 | 0 | 128 | 128 | 128 | 128 | 128 | 128 | 128 | 128 | 128 | 128 |

P

**FIG 5B**

| 0 | 0 | 0 | 0 | 0 | 0 | 0 | 0 | 0 | 0 | 0 | 0 | 0 | 0 | 0 | 0 | 0 |
|---|---|---|---|---|---|---|---|---|---|---|---|---|---|---|---|---|
| 0 | 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 | 0 |

| + | − |
|---|---|
| − | + |

$HP^{D}_{2x2}$

**FIG 5C**

| 0 | 0 | 0 | 0 | 0 | 0 | 0 | −256 | 0 | 0 | 0 | 0 | 0 | 0 | 0 | 0 | 0 |
|---|---|---|---|---|---|---|---|---|---|---|---|---|---|---|---|---|
| 0 | 0 | 0 | 0 | 0 | 0 | 0 | −256 | 0 | 0 | 0 | 0 | 0 | 0 | 0 | 0 | 0 |
| 0 | 0 | 0 | 0 | 0 | 0 | 0 | −256 | 0 | 0 | 0 | 0 | 0 | 0 | 0 | 0 | 0 |
| 0 | 0 | 0 | 0 | 0 | 0 | 0 | −256 | 0 | 0 | 0 | 0 | 0 | 0 | 0 | 0 | 0 |
| 0 | 0 | 0 | 0 | 0 | 0 | 0 | −256 | 0 | 0 | 0 | 0 | 0 | 0 | 0 | 0 | 0 |
| 0 | 0 | 0 | 0 | 0 | 0 | 0 | −256 | 0 | 0 | 0 | 0 | 0 | 0 | 0 | 0 | 0 |
| 0 | 0 | 0 | 0 | 0 | 0 | 0 | −256 | 0 | 0 | 0 | 0 | 0 | 0 | 0 | 0 | 0 |
| 0 | 0 | 0 | 0 | 0 | 0 | 0 | −256 | 0 | 0 | 0 | 0 | 0 | 0 | 0 | 0 | 0 |
| 0 | 0 | 0 | 0 | 0 | 0 | 0 | −256 | 0 | 0 | 0 | 0 | 0 | 0 | 0 | 0 | 0 |
| 0 | 0 | 0 | 0 | 0 | 0 | 0 | −256 | 0 | 0 | 0 | 0 | 0 | 0 | 0 | 0 | 0 |

| + | − |
|---|---|
| + | − |

$HP^{H}_{2x2}$

$HP_{2x2}^{V}$

$HP_{4x4}^{D}$

$HP_{4x4}^{H}$

$HP_{4x4}^{V}$

FIG 5D

FIG 5E

FIG 5F

FIG 5G

x2
x1
x1-1
x1-2

-512
-1024
-512 -1024

# FIG 5H

| | x1-6 | x1-5 | x1-4 | x1-3 | x1-2 | x1-1 | x1 | | | |
|---|---|---|---|---|---|---|---|---|---|---|
| 0 | 0 | -512 | -1024 | -1536 | -2048 | -1536 | -1024 | -512 | 0 | 0 | 0 |
| 0 | 0 | -512 | -1024 | -1536 | -2048 | -1536 | -1024 | -512 | 0 | 0 | 0 |
| 0 | 0 | -512 | -1024 | -1536 | -2048 | -1536 | -1024 | -512 | 0 | 0 | 0 |
| 0 | 0 | -512 | -1024 | -1536 | -2048 | -1536 | -1024 | -512 | 0 | 0 | 0 |
| 0 | 0 | -512 | -1024 | -1536 | -2048 | -1536 | -1024 | -512 | 0 | 0 | 0 |
| 0 | 0 | -512 | -1024 | -1536 | -2048 | -1536 | -1024 | -512 | 0 | 0 | 0 |
| 0 | 0 | -512 | -1024 | -1536 | -2048 | -1536 | -1024 | -512 | 0 | 0 | 0 |

| + | + | + | + | − | − | − | − |
|---|---|---|---|---|---|---|---|
| + | + | + | + | − | − | − | − |
| + | + | + | + | − | − | − | − |
| + | + | + | + | − | − | − | − |

$$HP^H_{4x8}$$

# FIG 5J

| 0 | 0 | 512 | 1024 | 1536 | 2048 | 2560 | 3072 | 3584 | 4096 | 4096 | 4096 |
|---|---|---|---|---|---|---|---|---|---|---|---|
| 0 | 0 | 512 | 1024 | 1536 | 2048 | 2560 | 3072 | 3584 | 4096 | 4096 | 4096 |
| 0 | 0 | 512 | 1024 | 1536 | 2048 | 2560 | 3072 | 3584 | 4096 | 4096 | 4096 |
| 0 | 0 | 512 | 1024 | 1536 | 2048 | 2560 | 3072 | 3584 | 4096 | 4096 | 4096 |
| 0 | 0 | 512 | 1024 | 1536 | 2048 | 2560 | 3072 | 3584 | 4096 | 4096 | 4096 |
| 0 | 0 | 512 | 1024 | 1536 | 2048 | 2560 | 3072 | 3584 | 4096 | 4096 | 4096 |
| 0 | 0 | 512 | 1024 | 1536 | 2048 | 2560 | 3072 | 3584 | 4096 | 4096 | 4096 |

| + | + | + | + | + | + | + | + |
|---|---|---|---|---|---|---|---|
| + | + | + | + | + | + | + | + |
| + | + | + | + | + | + | + | + |
| + | + | + | + | + | + | + | + |

$$LP_{4x8}$$

EP 2 023 638 A2

## FIG 6A

|   |   |   |   |   | | x1 | x2 | | | | | | |
|---|---|---|---|---|----|----|----|-----|-----|-----|-----|-----|-----|
| 0 | 0 | 0 | 0 | 6 | 18 | 36 | 92 | 110 | 122 | 128 | 128 | 128 | 128 |
| 0 | 0 | 0 | 0 | 6 | 18 | 36 | 92 | 110 | 122 | 128 | 128 | 128 | 128 |
| 0 | 0 | 0 | 0 | 6 | 18 | 36 | 92 | 110 | 122 | 128 | 128 | 128 | 128 |
| 0 | 0 | 0 | 0 | 6 | 18 | 36 | 92 | 110 | 122 | 128 | 128 | 128 | 128 |
| 0 | 0 | 0 | 0 | 6 | 18 | 36 | 92 | 110 | 122 | 128 | 128 | 128 | 128 |
| 0 | 0 | 0 | 0 | 6 | 18 | 36 | 92 | 110 | 122 | 128 | 128 | 128 | 128 |

P'

## FIG 6B

EP 2 023 638 A2

**FIG 7A**

```
      0    0    0    0    0    0    0    0    0    0    0    0    0    0
      0    0    0    0    0    0    0    0    0    0    0    0    0    0
      0    0    0    0    0    0    0    0    0    0    0    0    0    0
      0    0    0    0    0    0    0    0    0    0    0    0    0    0
      0    0    0    0    0    0    0    0    0    0    0    0    0    0
y1    0    0    0    0    0    0    0    0    0    0    0    0    0    0
y2  128  128  128  128  128  128  128  128  128  128  128  128  128  128
    128  128  128  128  128  128  128  128  128  128  128  128  128  128
    128  128  128  128  128  128  128  128  128  128  128  128  128  128
    128  128  128  128  128  128  128  128  128  128  128  128  128  128
    128  128  128  128  128  128  128  128  128  128  128  128  128  128
    128  128  128  128  128  128  128  128  128  128  128  128  128  128
    128  128  128  128  128  128  128  128  128  128  128  128  128  128
```

P

**FIG 7B**

```
  0   0   0   0   0   0   0   0   0   0   0   0   0
  0   0   0   0   0   0   0   0   0   0   0   0   0
  0   0   0   0   0   0   0   0   0   0   0   0   0
  0   0   0   0   0   0   0   0   0   0   0   0   0
  0   0   0   0   0   0   0   0   0   0   0   0   0
  0   0   0   0   0   0   0   0   0   0   0   0   0
  0   0   0   0   0   0   0   0   0   0   0   0   0
  0   0   0   0   0   0   0   0   0   0   0   0   0
  0   0   0   0   0   0   0   0   0   0   0   0   0
  0   0   0   0   0   0   0   0   0   0   0   0   0
  0   0   0   0   0   0   0   0   0   0   0   0   0
```

| + | − |
|---|---|
| − | + |

D
$HP_{2x2}$

**FIG 7C**

```
  0   0   0   0   0   0   0   0   0   0   0   0   0
  0   0   0   0   0   0   0   0   0   0   0   0   0
  0   0   0   0   0   0   0   0   0   0   0   0   0
  0   0   0   0   0   0   0   0   0   0   0   0   0
  0   0   0   0   0   0   0   0   0   0   0   0   0
  0   0   0   0   0   0   0   0   0   0   0   0   0
  0   0   0   0   0   0   0   0   0   0   0   0   0
  0   0   0   0   0   0   0   0   0   0   0   0   0
  0   0   0   0   0   0   0   0   0   0   0   0   0
  0   0   0   0   0   0   0   0   0   0   0   0   0
  0   0   0   0   0   0   0   0   0   0   0   0   0
```

| + | − |
|---|---|
| + | − |

H
$H_{2x2}$

EP 2 023 638 A2

FIG 7D

$$HP_{2x2}^{V}$$

FIG 7E

$$HP_{4x4}^{D}$$

FIG 7F

$$HP_{4x4}^{H}$$

EP 2 023 638 A2

**FIG 7G**

```
        0      0      0      0      0      0      0      0      0      0      0
        0      0      0      0      0      0      0      0      0      0      0
        0      0      0      0      0      0      0      0      0      0      0
y1-2  -512   -512   -512   -512   -512   -512   -512   -512   -512   -512   -512
y1-1 -1024  -1024  -1024  -1024  -1024  -1024  -1024  -1024  -1024  -1024  -1024
y1    -512   -512   -512   -512   -512   -512   -512   -512   -512   -512   -512
        0      0      0      0      0      0      0      0      0      0      0
        0      0      0      0      0      0      0      0      0      0      0
        0      0      0      0      0      0      0      0      0      0      0
```

```
+   +   +   +
+   +   +   +
-   -   -   -
-   -   -   -
```
$V$
$HP_{4x4}$

**FIG 7H**

```
0   0   0   0   0   0   0
0   0   0   0   0   0   0
0   0   0   0   0   0   0
0   0   0   0   0   0   0
0   0   0   0   0   0   0
0   0   0   0   0   0   0
0   0   0   0   0   0   0
0   0   0   0   0   0   0
0   0   0   0   0   0   0
```

```
+   +   +   +   -   -   -   -
+   +   +   +   -   -   -   -
+   +   +   +   -   -   -   -
+   +   +   +   -   -   -   -
```
$H$
$HP_{4x8}$

**FIG 7J**

```
   0      0      0      0      0      0      0
   0      0      0      0      0      0      0
   0      0      0      0      0      0      0
1024   1024   1024   1024   1024   1024   1024
2048   2048   2048   2048   2048   2048   2048
3072   3072   3072   3072   3072   3072   3072
4096   4096   4096   4096   4096   4096   4096
4096   4096   4096   4096   4096   4096   4096
4096   4096   4096   4096   4096   4096   4096
```

```
+   +   +   +   +   +   +   +
+   +   +   +   +   +   +   +
+   +   +   +   +   +   +   +
+   +   +   +   +   +   +   +
```
$LP_{4x8}$

EP 2 023 638 A2

## FIG 8A

P'

| | | | | | | | | | | | | |
|---|---|---|---|---|---|---|---|---|---|---|---|---|
| 0 | 0 | 0 | 0 | 0 | 0 | 0 | 0 | 0 | 0 | 0 | 0 | 0 |
| 6 | 6 | 6 | 6 | 6 | 6 | 6 | 6 | 6 | 6 | 6 | 6 | 6 |
| 18 | 18 | 18 | 18 | 18 | 18 | 18 | 18 | 18 | 18 | 18 | 18 | 18 |

y1

| | | | | | | | | | | | | |
|---|---|---|---|---|---|---|---|---|---|---|---|---|
| 36 | 36 | 36 | 36 | 36 | 36 | 36 | 36 | 36 | 36 | 36 | 36 | 36 |

y2

| | | | | | | | | | | | | |
|---|---|---|---|---|---|---|---|---|---|---|---|---|
| 92 | 92 | 92 | 92 | 92 | 92 | 92 | 92 | 92 | 92 | 92 | 92 | 92 |
| 110 | 110 | 110 | 110 | 110 | 110 | 110 | 110 | 110 | 110 | 110 | 110 | 110 |
| 122 | 122 | 122 | 122 | 122 | 122 | 122 | 122 | 122 | 122 | 122 | 122 | 122 |
| 128 | 128 | 128 | 128 | 128 | 128 | 128 | 128 | 128 | 128 | 128 | 128 | 128 |

## FIG 8B

P'

y1   y2   y

## FIG 9

## FIG 10

## FIG 12

FIG 11A

FIG 11B

## FIG 13A

## FIG 13B

## FIG 14